(19) Europäisches Patentamt
European Patent Office
Office européen des brevets

(11) **EP 3 925 706 B1**

(12) **FASCICULE DE BREVET EUROPEEN**

(45) Date de publication et mention
de la délivrance du brevet:
**12.03.2025 Bulletin 2025/11**

(21) Numéro de dépôt: **21179941.6**

(22) Date de dépôt: **17.06.2021**

(51) Classification Internationale des Brevets (IPC):
**B05B 13/04** *(2006.01)* **B05B 12/00** *(2018.01)*
**B05B 12/04** *(2006.01)* **B41J 3/407** *(2006.01)*
**B25J 9/16** *(2006.01)*

(52) Classification Coopérative des Brevets (CPC):
**B05B 13/0452; B05B 12/00; B05B 12/04;
B25J 9/1679; B41J 3/4073;** G05B 2219/45065

(54) **PROCÉDÉ ET INSTALLATION D'APPLICATION DE PRODUIT DE REVÊTEMENT AU MOYEN D'UNE TÊTE D'IMPRESSION**

VERFAHREN UND ANLAGE ZUR AUFBRINGUNG EINES BESCHICHTUNGSPRODUKTS MIT HILFE EINES DRUCKKOPFES

METHOD AND INSTALLATION FOR APPLYING A COATING PRODUCT WITH A PRINTING HEAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2020 FR 2006334**

(43) Date de publication de la demande:
**22.12.2021 Bulletin 2021/51**

(73) Titulaire: **Exel Industries
51200 Epernay (FR)**

(72) Inventeurs:
• **CHEVRON, Didier
75009 PARIS (FR)**
• **BEAUDOIN, Camilien
75009 PARIS (FR)**

(74) Mandataire: **Lavoix
62, rue de Bonnel
69448 Lyon Cedex 03 (FR)**

(56) Documents cités:
**WO-A1-2019/201367 DE-A1- 102014 011 301**

EP 3 925 706 B1

**Description**

La présente invention concerne un procédé d'application de produit de revêtement sur une surface à revêtir d'un objet, au moyen d'une tête d'impression montée sur le bras d'un robot et qui comprend au moins une buse d'impression. L'invention concerne également une installation d'application de produit de revêtement prévue pour mettre en œuvre un tel procédé.

US-A-2015/0042716 enseigne de générer un ensemble spatial de points en correspondance avec une zone à revêtir, de générer un réseau tridimensionnel correspondant et de générer des données de trajectoire pour déplacer un robot supportant une tête d'impression, ainsi que des données de trame permettant d'activer une tête d'impression.

Il est d'autre part connu de US-A-2016/0052312 d'effectuer un revêtement au moyen de têtes d'impression qui circulent selon deux trajectoires formant entre elles un angle aigu, ce qui est particulièrement adapté au revêtement d'une surface courbe.

Il est également connu de DE-A-10 2014 011301 de modéliser une surface à revêtir en vue de l'application d'un produit au moyen d'une tête de projection.

Ces méthodes connues sont théoriquement efficaces mais sont, en pratique, difficiles à mettre en œuvre si l'on doit tenir compte des contraintes liées à la géométrie de la surface à revêtir et, le cas échéant, d'une surface à ne pas revêtir, ainsi que des contraintes de déplacement de la tête d'impression.

C'est à ces inconvénients qu'entend plus particulièrement remédier l'invention en proposant un nouveau procédé d'application de produit de revêtement liquide sur une surface à revêtir au moyen d'une tête d'impression, ce procédé étant plus facile et plus intuitif à mettre en œuvre et présentant un meilleur résultat d'application que ceux de l'art antérieur.

A cet effet, l'invention concerne un procédé d'application de produit de revêtement sur une surface à revêtir d'un objet, cette surface à revêtir étant modélisée par un fichier informatique et comprenant au moins une zone à revêtir, ce procédé étant mis en œuvre au moyen d'une tête d'impression qui, d'une part, est montée sur un bras de robot prévu pour déplacer la tête d'impression en regard de la surface et qui, d'autre part, comprend un corps équipé d'au moins une buse d'impression. Le procédé d'application comprend au moins des étapes successives, réalisées par un calculateur et consistant à :

a) définir, par un calcul automatique à partir du fichier informatique modélisant la surface à revêtir, une tranche de la surface à revêtir ;
b) définir, par un calcul automatique et par itérations, une trajectoire en regard de la tranche de surface à revêtir, cette trajectoire étant formée d'une succession de points remarquables à atteindre par un point déterminé de la tête d'impression avec, en chaque point remarquable, une orientation de la tête d'impression à respecter ;
c) retirer, par un calcul, la tranche à revêtir du fichier informatique modélisant la surface à revêtir ;
d) recommencer à l'étape a) jusqu'à ce que la surface à revêtir modélisée soit d'aire nulle ;
e) définir un programme d'activation de chaque buse de la tête d'impression sur chaque trajectoire; et
f) appliquer le produit de revêtement en activant chaque buse de la tête d'impression sur les différentes trajectoires définies à l'étape b) en respectant les orientations en chaque point remarquable, en fonction du programme d'activation défini à l'étape e).

Conformément à l'invention, l'étape a) comprend au moins des sous-étapes successives consistant à :

a1) définir un premier repère orthogonal ayant

- pour origine un point sélectionné par un utilisateur dans une surface de support imaginaire située à proximité de la surface à revêtir dans une représentation de l'espace utilisant le fichier informatique, , ou bien dans la surface à revêtir elle-même
- pour axe des hauteurs une normale à la surface de support ou à la surface au point d'origine,
- pour axe des ordonnées le produit vectoriel de l'axe des hauteurs et un axe aligné sur une direction d'avance sélectionnée par l'utilisateur, et
- pour axe des abscisses le produit vectoriel de l'axe des ordonnées et de l'axe des hauteurs

a2) définir une première normale et initier sa valeur comme égale à un vecteur dont la direction est l'axe des hauteurs du premier repère orthogonal défini en dernier lieu;
a3) définir, dans le premier repère orthogonal, un premier point comme un point de la surface à revêtir dont l'ordonnée est la plus grande dans le premier repère orthogonal, parmi les points de la surface à revêtir ;
a4) définir, dans le premier repère orthogonal, un deuxième point comme un point de la surface à revêtir situé, par rapport au premier point, à une première distance mesurée selon l'axe des ordonnées et dans un sens négatif selon cet axe, cette première distance étant fixée en fonction de la répartition de chaque buse sur la tête d'impression ;
a5) calculer une normale moyenne à une tranche temporaire de la surface à revêtir définie entre un premier plan et un deuxième plan perpendiculaires à l'axe des ordonnées du premier repère orthogonal et passant respectivement par les premier et deuxième points
a6) comparer la première normale et la normale moyenne ;
a7) si la première normale et la normale moyenne sont identifiées comme différentes à l'étape a6),

a71) redéfinir la première normale comme égale à la normale moyenne ;
a72) redéfinir le premier repère orthogonal en prenant en compte cette nouvelle première normale ;
a73) mettre en œuvre à nouveau les sous-étapes a3) à a6) ;

a8) si la première normale et la normale moyenne sont identifiées comme égales à l'étape a6), définir la tranche à revêtir comme égale à la tranche temporaire de l'étape a5).

Grâce à l'invention, il est possible, en partant d'éléments simples repérés en périphérie d'une surface à revêtir, tels que des points, des segments ou des bords, de définir, à partir d'un fichier informatique modélisant la surface à revêtir, une trajectoire tridimensionnelle du robot uniquement en fonction de la surface à revêtir, en effectuant des allers-retours avec une tête d'impression. Ensuite, le procédé de l'invention permet de générer automatiquement le programme d'activation des buses de la tête d'impression, afin d'appliquer le produit de revêtement, sur la surface à revêtir, là où il doit l'être et avec une orientation correcte de la tête d'impression.
Une contrainte initiale dont tient compte le procédé de l'invention est que la tête d'impression reste plutôt orientée dans un sens prédéfini, par exemple dans un sens correspondant à un trajet aller le long d'une tranche de la surface à revêtir, tout en s'appuyant sur les éléments simples sélectionnés au départ, tels que les points, segments et bords susmentionnés.
Selon des aspects avantageux mais non obligatoires de l'invention, ce procédé peut incorporer une ou plusieurs des caractéristiques suivantes prises selon toute combinaison techniquement admissible :

- L'étape b) comprend des sous-étapes successives consistant à :

bA) définir par itérations une portion de la tranche de surface à revêtir ;
bB) calculer un point d'impact sur la portion définie à la sous-étape bA) et un axe d'orientation de la tête d'impression au point d'impact ;
bC) retirer, par le calcul, une fraction de la tranche de surface à revêtir ;
bD) recommencer à l'étape bA) jusqu'à ce que la tranche de surface à revêtir soit d'aire nulle ;
bE) générer une partie de la trajectoire correspondant à un aller de la tête d'impression le long de la tranche à revêtir ; et
bF) en fonction de la largeur d'un faisceau de produit de revêtement issu de la tête d'impression et d'une largeur de la tranche à revêtir, générer le cas échéant une partie de la trajectoire correspondant à un retour ou à un aller supplémentaire de la tête d'impression le long de la tranche à revêtir.

- Lorsque la surface à revêtir comprend au moins une zone à ne pas revêtir, le procédé comprend une étape supplémentaire, mise en œuvre entre les étapes b) et c) et consistant à adapter la trajectoire de tête d'impression en regard de la zone à ne pas revêtir, pour ne pas heurter l'objet.
- Le corps de la tête d'impression est équipé de plusieurs buses qui sont disposées en rangées parallèles entre elles alors que la première distance est un multiple d'une distance entre deux rangées de buses adjacentes ou entre deux buses consécutives d'une même rangée, mesurée perpendiculairement à une direction d'avance de la tête d'impression.
- L'étape b) comprend au moins des sous-étapes successives consistant à :

b1) définir un deuxième repère orthogonal ayant pour origine le premier point, et pour axes des abscisses, des ordonnées et des hauteurs des axes confondus avec les axes du premier repère orthogonal défini en dernier lieu, à l'étape a1) ou à l'étape a72) ;
b2) définir un nouvel axe des abscisses comme l'axe des abscisses du deuxième repère orthogonal ;
b3) définir, dans le deuxième repère orthogonal, un point initial comme un point de la tranche de surface à revêtir dont l'abscisse est la plus petite parmi les points de la tranche ;
b4) définir, dans le deuxième repère orthogonal, un point de coupure comme un point de la tranche de surface à revêtir situé, par rapport au point initial et le long du nouvel axe des abscisses, à une distance donnée ;
b5) calculer une normale moyenne à une portion temporaire de la tranche de la surface à revêtir définie entre un troisième plan et un quatrième plan perpendiculaire au nouvel axe des abscisses et passant respectivement par le point initial et par le point de coupure

b6) calculer un axe longitudinal temporaire égal au produit vectoriel normalisé de la normale moyenne calculée à l'étape b5) et de l'opposé de l'axe des ordonnées du deuxième repère orthogonal ;

b7) comparer le nouvel axe des abscisses et l'axe longitudinal temporaire ;

b8) si le nouvel axe des abscisses et l'axe longitudinal temporaire sont identifiés comme différents à l'étape b7),

b81) redéfinir le nouvel axe des abscisses comme égal à l'axe longitudinal temporaire ;
b82) mettre en œuvre à nouveau les sous-étapes b3) à b7)

b9) si le nouvel axe des abscisses et l'axe longitudinal temporaire sont identifiés comme égaux à l'étape b7), définir une portion de tranche à revêtir comme égale à la portion temporaire de l'étape b5).

- L'étape b) comprend au moins des sous-étapes successives suivant les sous-étapes b1) à b9) et consistant à :

b10) calculer un vecteur d'orientation de la tête d'impression égal au produit vectoriel du nouvel axe des abscisses et de l'opposé de l'axe des ordonnées du deuxième repère orthogonal ;
b11) définir un point de centre comme un point situé

- à mi-distance entre les projections orthogonales du point initial et du point de coupure sur une droite passant par le point initial et de vecteur directeur égal au nouvel axe et
- à une troisième distance du point initial mesurée selon l'axe des ordonnées du deuxième repère orthogonal et dans un sens négatif selon cet axe, cette troisième distance étant égale à la moitié de la première distance ;

b12) définir un point d'impact comme la projection du point de centre sur la portion de tranche de surface à revêtir selon une droite dont le vecteur directeur est le vecteur d'orientation de la tête d'impression ;
b13) si le point d'impact existe, ajouter le point d'impact et le vecteur d'orientation de la tête d'impression dans la trajectoire.

- Le corps de la tête d'impression est équipé de plusieurs buses qui sont disposées en rangées parallèles entre elles, alors que l'abscisse, le long du nouvel axe des abscisses du deuxième repère orthogonal, du point de centre est égale à la demi-somme des abscisses des projections orthogonales du point initial et du point de coupure sur une droite passant par le point initial et de vecteur directeur égal au nouvel axe et alors que le point de centre est décalé, par rapport à cette droite et dans le sens opposé celui de l'axe des ordonnées du deuxième repère orthogonal, d'une distance mesurée selon l'axe des ordonnées et égale à la moitié du produit du nombre de rangées de buses et de la distance entre deux de ces rangées.

- Si le point d'impact de l'étape b12) n'existe pas, du fait de l'absence de matière de la tranche de surface à revêtir le long d'une droite dont le vecteur directeur est le vecteur d'orientation de la tête d'impression et qui passe par le point de centre, des sous-étapes supplémentaires sont mises en œuvre entre les sous-étapes b12) et b13), qui consistent à :

b14) rechercher un point extrême de la portion de tranche à revêtir dont la position le long d'un axe parallèle au vecteur d'orientation de la tête d'impression est la plus éloignée dans un sens opposé à ce vecteur ;
b15) projeter le point extrême sur un axe passant par le point de centre et parallèle au vecteur d'orientation de la tête d'impression pour définir un point d'impact alternatif ;
b16) assimiler le point d'impact au point d'impact alternatif pour la portion de tranche à revêtir en cours de traitement.

- L'étape b) comprend au moins des sous-étapes successives suivant les sous-étapes b1) à b13) et consistant à :

b18) réduire la tranche de surface à revêtir d'une fraction de celle-ci, notamment de la portion définie à l'étape b9) ;
b19) déterminer si la tranche de surface à revêtir a une aire non nulle ;
b20) si le résultat de la détermination de l'étape b19) est positif, mettre à nouveau en œuvre les sous-étapes b3) à b19).

- L'étape b) comprend au moins des sous-étapes successives suivant les sous-étapes b1) à b13) et consistant à :

b21) définir un vecteur d'axe de la tête d'impression en chaque point d'impact comme égal au produit vectoriel normalisé du vecteur d'orientation de la tête d'impression en ce point et de l'axe des ordonnées du deuxième repère orthogonal ;

b23) définir un point remarquable à atteindre à partir du point d'impact, de la répartition de la ou des buses sur la tête d'impression, du vecteur d'axe de la tête et de l'axe des ordonnées du deuxième repère orthogonal ;

b24) inclure le point remarquable et le vecteur d'orientation de la tête d'impression au point d'impact correspondant dans la trajectoire.

- L'étape b) comprend une sous-étape supplémentaire d'ajout à la trajectoire définie pour chaque tranche de la surface à revêtir d'au moins un point d'entrée et/ou d'au moins un point de sortie, supplémentaire par rapport à ceux calculés à l'étape b24) et/ou l'étape b) comprend une sous-étape supplémentaire d'optimisation du nombre de points remarquables de la trajectoire au cours de au moins un point remarquable est supprimé, à savoir un point remarquable colinéaire avec un point qui le précède et avec un point qui le suit le long de la trajectoire et dont l'axe d'orientation est parallèle à l'axe d'orientation du point qui le précède et avec l'axe d'orientation du point qui le suit le long de la trajectoire.

- L'étape b) comprend une sous-étape de détermination, en fonction de la largeur d'un faisceau de produit de revêtement issu de la tête d'impression et d'une largeur de la tranche de surface à revêtir, du nombre d'aller-retour de la tête d'impression à effectuer pour revêtir la tranche à revêtir et, le cas échéant, un ou des tronçons de la trajectoire, suivant le premier aller, sont calculés en inversant l'ordre des points remarquables définis à l'étape b23) pour le tronçon de trajectoire précédent.

- Les sous-étapes a71) à a73) ou les sous-étapes b81) et b82) sont mises en œuvre jusqu'à ce qu'un nombre limite d'itérations soit atteint.

- A partir de la trajectoire définie à l'étape b), le calculateur calcule, pour chaque buse de la tête d'impression, une distance à revêtir ou une distance à ne pas revêtir sur une succession de pas d'avance de la tête d'impression.

- L'étape e) comprend des sous étapes consistant à :

e1) discrétiser le déplacement de la tête d'impression, entre des points remarquables d'une trajectoire, au moyen de positions discrétisées;

e2) déterminer l'existence d'un point d'impact pour chaque buse en chaque position discrétisée à la sous-étape e1) ;

e3) calculer une distance à revêtir ou une distance à ne pas revêtir en chaque position discrétisée de la trajectoire et, éventuellement, des coefficients multiplicateurs, en fonction de la distance entre une buse et une buse de référence; et

e4) construire un fichier de programmation pour l'activation de chaque buse le long des trajectoires.

Selon un autre aspect, l'invention concerne une installation d'application de produit de revêtement liquide sur une surface à revêtir d'un objet, l'installation incluant une tête d'impression qui, d'une part, est montée sur un bras de robot prévu pour déplacer la tête d'impression en regard de la surface et qui, d'autre part, comprend un corps équipé d'au moins une buse d'impression. Cette installation est caractérisée en ce qu'elle comprend une unité électronique de commande configurée pour mettre en œuvre les étapes d'un procédé tel que mentionné ci-dessus, réalisées par le calculateur.

L'invention sera mieux comprise et d'autres avantages de celles-ci apparaîtront plus clairement à la lumière de la description qui va suivre d'un mode de réalisation d'un procédé conforme à son principe, donnée uniquement à titre d'exemple et faite en référence aux dessins annexés dans lesquels :

[Fig 1] la figure 1 est une représentation schématique de principe d'une installation de revêtement de carrosserie de véhicule automobile conforme à l'invention, dans laquelle est mis en œuvre un procédé également conforme à l'invention ;

[Fig 2] la figure 2 est une représentation schématique de plusieurs têtes d'impression pouvant être utilisées dans l'installation de la figure 1, avec le procédé de l'invention ;

[Fig 3] la figure 3 est une représentation schématique analogue à la figure 2 pour une autre tête d'impression pouvant être utilisée dans l'installation de la figure 1, avec le procédé de l'invention ;

[Fig 4] la figure 4 est une représentation schématique de principe de mouvements d'aller et retour de la tête d'impression de la figure 3, pour revêtir une surface dans deux cas d'orientation de la tête d'impression ;

[Fig 5] la figure 5 est une représentation schématique de principe d'une surface à revêtir modélisée et d'une surface de support disposée dans le même environnement modélisé, lors d'une étape du procédé de l'invention ;

[Fig 6] la figure 6 est une représentation schématique de la surface de la figure 5, lors d'une étape ultérieure du procédé d'invention ;

[Fig 7] la figure 7 est une représentation schématique de la même surface que celle de la figure 5 et 6, lors d'une étape ultérieure du procédé de l'invention ;

[Fig 8] la figure 8 est une représentation à plus grande échelle du détail VIII à la figure 7, lors d'une étape ultérieure du procédé de l'invention ;

[Fig 9] la figure 9 est une représentation schématique du même détail, lors d'une étape encore ultérieure de l'invention ;

[Fig 10] la figure 10 est une vue de face de la tête d'impression et de certaines grandeurs utilisées dans le procédé de l'invention ;

[Fig 11] la figure 11 est un schéma bloc général du procédé de l'invention ;

[Fig 12] la figure 12 est un schéma bloc détaillé d'une étape du procédé de l'invention ; et

[Fig 13] la figure 13 est un schéma bloc détaillé d'une autre étape du procédé de l'invention.

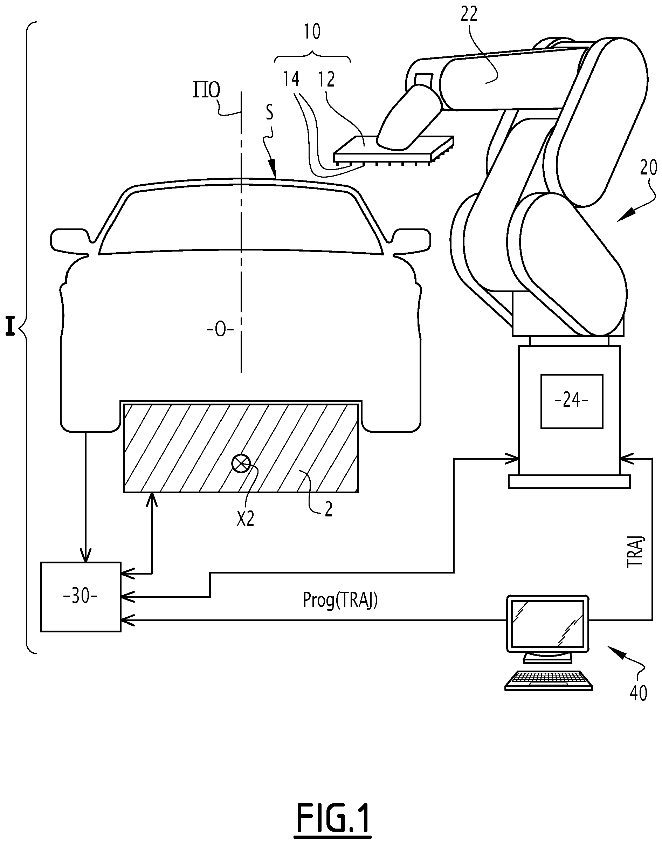

L'installation I représentée sur la figure 1 est prévue pour l'application de peinture sur des objets O qui, dans l'exemple de cette figure, sont des carrosseries de véhicules automobiles.

Plus précisément, dans cet exemple, l'installation I vise à permettre le revêtement du toit d'une telle carrosserie, de part et d'autre d'un plan médian $\pi 0$ parallèle à la plus grande dimension de la carrosserie.

En variante, les objets à revêtir peuvent être d'autres parties d'une carrosserie de véhicule automobile, par exemple des parechocs, des portes ou, plus généralement, tout objet pouvant être revêtu, par exemple une partie de carlingue d'aéronef ou une caisse d'appareil électroménager, ces exemples n'étant pas limitatifs.

L'installation I comprend un convoyeur 2 prévu pour déplacer les objets O le long d'un axe de convoyage X2, perpendiculaire au plan de la figure 1. Ce convoyeur est, de préférence, de type « stop-and-go », c'est-à-dire qu'il maintient les objets immobiles en cours d'application du produit de revêtement. L'installation I comprend également un applicateur 10 monté à l'extrémité du bras 22 d'un robot multiaxes 20 disposé au voisinage du convoyeur 2. En variante, le robot 20 peut être un robot réciprocateur ou tout autre robot capable de déplacer l'applicateur 10 par rapport aux objets O à revêtir. Le robot comprend un contrôleur 24, parfois dénommé « baie robot », qui pilote les déplacements du bras 22 en fonction d'un programme de trajectoire TRAJ à suivre.

A la figure 1, le contrôleur est représenté dans le robot 20. Il peut toutefois être disposé à l'extérieur du robot.

L'applicateur 10 est une tête d'impression qui comprend un corps rigide 12 et un certain nombre de buses d'impression 14.

L'installation I comprend également une unité électronique de commande 30 ou ECU (de l'Anglais « electronic control unit ») qui est en communication bidirectionnelle au moins avec le convoyeur 2 et le contrôleur 24 du robot 20 et qui pilote la tête d'impression 10. A cet effet, l'ECU 30 comprend au moins un microprocesseur et une mémoire de stockage d'un programme informatique, ce microprocesseur et cette mémoire n'étant pas représentés. La communication entre l'ECU 30 et le contrôleur 24 permet de synchroniser l'activation de la tête d'impression et la position du bras 22 du robot.

A la figure 1, l'ECU 30 est représentée indépendante des appareils 2 et 20. En variante, l'ECU 30 peut être intégré au robot 20.

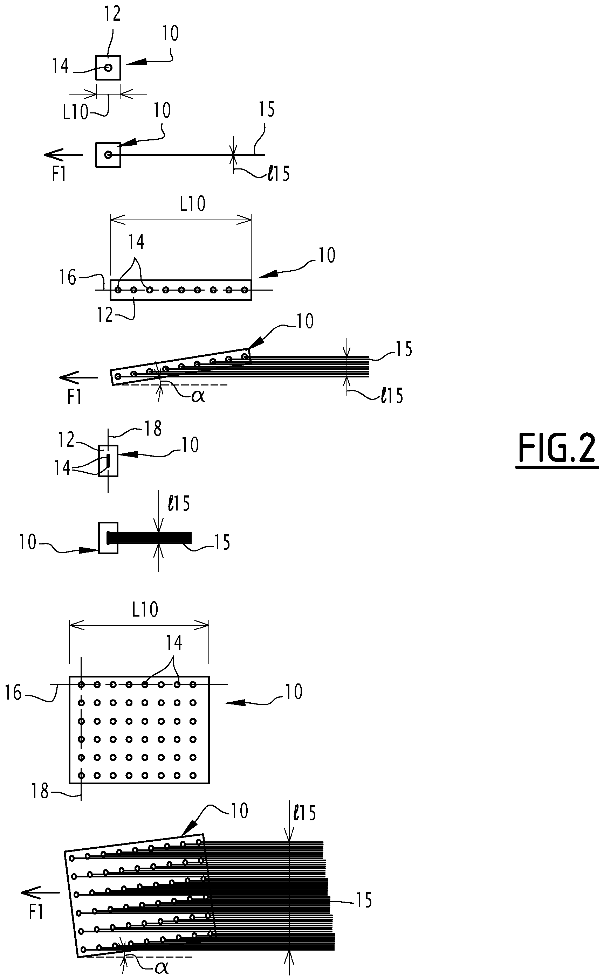

Comme représenté en partie supérieure de la figure 2, la tête d'impression 10 peut comprendre un corps 12 et une unique buse d'impression 14. Dans ce cas, lorsqu'elle est déplacée dans le sens de la flèche F1 à la figure 2, la tête d'impression 10 dépose un trait ou faisceau de produit de revêtement, qui peut être qualifié de pinceau 15, et dont la largeur $\ell 15$, mesurée perpendiculairement à direction de déplacement de la tête d'impression dans le plan perpendiculaire à la buse 14, présente une première valeur.

Dans le deuxième cas représenté à la figure 2, la tête d'impression 10 comprend un corps rigide 12 sur lequel est montée une rangée 16 de huit buses 14, repérée par son trait d'axe. La tête d'impression 10 peut être déplacée parallèlement à la flèche F1 en étant inclinée d'un angle $\alpha$ par rapport à la direction de cette flèche, de sorte que les différents traits de produit de revêtement sortant des buses 14 définissent ensemble un faisceau continu 15 de produit de revêtement appliqué sur une surface, la largeur $\ell 15$ de ce faisceau 15 ayant une deuxième valeur, égale à environ huit fois la première valeur.

Dans le troisième cas représenté à la figure 2, la tête d'impression 10 comprend une colonne 18, repérée par son trait d'axe, de six buses d'impression 14 disposées sur un corps rigide 12. Lorsque la tête d'impression 10 est déplacée perpendiculairement à cette colonne, et pour autant que ces buses sont suffisamment rapprochées les unes des autres, elle dépose un faisceau continu 15 sur une surface à revêtir, la largeur $\ell 15$ de ce faisceau ayant une troisième valeur, égale à environ six fois la première valeur.

Dans le quatrième exemple représenté à la figure 2, le corps rigide 12 de la tête d'impression 10 porte des buses 14 reparties en six rangées 16 et huit colonnes 18, repérées par leurs traits d'axe respectifs comme dans les deuxième et troisième exemples. Dans ce cas, les buses 14 sont reparties avec une compacité élevée sur le corps rigide 12, de sorte que lorsque la tête d'impression est déplacée parallèlement à la flèche F1, en étant inclinée d'un angle $\alpha$, comme dans le deuxième cas, les différentes buses 14 appliquent un faisceau 15 dont la largeur $\ell 15$ a une valeur égale à six fois la deuxième valeur.

Les quatre types de têtes d'impression représentées à la figure 2 peuvent être considérées comme compactes, en ce sens que les faisceaux de produit de revêtement émis par le déplacement d'une ou l'autre de ces têtes dans le sens de la flèche F1 sont continus dans le sens de la largeur.

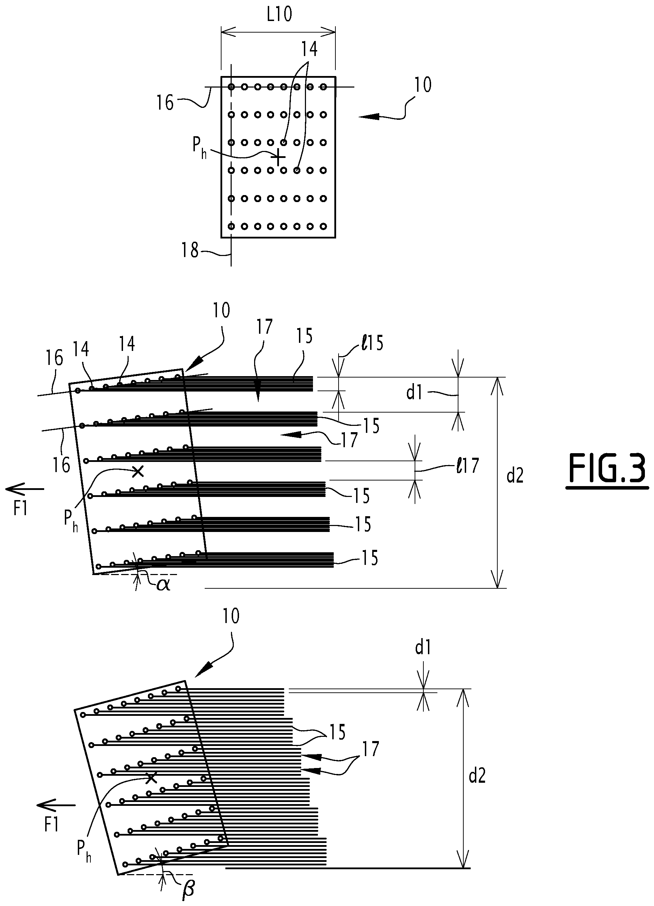

Dans l'exemple représenté à la figure 3, la tête d'impression 10 comporte, sur son corps rigide 12, quarante-huit buses 14 reparties en six rangées 16 et huit colonnes 18. Une différence par rapport au quatrième exemple représenté à la figure 2 est que, lorsque la tête d'impression 10 est déplacée parallèlement à la flèche F1, six faisceaux distincts 15 sont produits, chacun avec une largeur $\ell 15$ de valeur comparable à la deuxième valeur mentionnée ci-dessus. Ces faisceaux 15 sont disjoints, en ce sens qu'il existe entre eux des zones 17 dans lesquelles aucun produit de revêtement n'est appliqué lors du déplacement de la buse 10 dans le sens de la flèche F1, comme représenté au centre de la figure 3.

On note $P_h$ le centre géométrique de la face de la tête d'impression 10 qui porte les buses 14.

Dans l'exemple d'utilisation du bas de la figure 3, la tête d'impression 10 est inclinée d'un angle $\beta$ supérieur à l'angle $\alpha$ de sorte que lorsqu'elle est déplacée parallèlement à la flèche F1, quarante-huit faisceaux disjoints 15 du type de celui représenté en partie haute de la figure 2, sont appliqués, ces faisceaux étant séparés deux-à-deux par des zones 17 où aucun produit de revêtement n'est appliqué.

La tête d'impression 10 de la figure 3 est d'une configuration non compacte dans laquelle les faisceaux 15 ne sont pas continus sur toute la largeur d'application du produit de revêtement puisque des espaces 17 demeurent entre ces faisceaux, comme expliqué ci-dessus.

On note n le nombre de rangées 16 et m le nombre de colonnes 18 de la tête d'impression 10. Le nombre de buses 14 est de n X m. Dans l'exemple de la figure 3, ce nombre est de 6 X 8 = 48.

On considère la configuration de la figure 3 où la tête d'impression 10 est inclinée de l'angle $\alpha$. Dans cette configuration, on note d1 une distance mesurée parallèlement à la largeur $\ell 15$ d'un faisceau 15, donc perpendiculairement à la direction d'avance représentée par la flèche F1, entre deux rangées de buses 16 adjacentes. On note $\ell 17$ la largeur d'un espace 17, mesurée parallèlement à la largeur $\ell 15$. La distance d1 est égale à la somme des largeurs $\ell 15$ et $\ell 17$.

Quel que soit la tête d'impression utilisée, les buses 14 forment chacune un orifice d'éjection de produit de revêtement dont le diamètre est compris entre 20 micromètres ($\mu$m) et 500 micromètres, de préférence entre 50 et 200 $\mu$m, de préférence encore de l'ordre de 100 $\mu$m. Le diamètre des buses induit la largeur du faisceau individuel déposé par chaque buse, comme dans la configuration du haut de la figure 2 ou celle du bas de la figure 3, ou la largeur combinée des faisceaux formés par la juxtaposition de faisceaux individuels, comme dans les autres configurations. En outre, les buses 14 sont chacune alimentées à travers un système de contrôle de l'écoulement du produit de revêtement qui peut être de type piézoélectrique, électromagnétique ou pneumatique.

L'invention peut être mise en œuvre avec toutes les têtes d'impression 10 représentées aux figures 2 et 3 et avec des variantes de celles-ci concernant le nombre de rangées 16 et de colonnes 18 et le nombre de buses par colonne ou rangée, pour autant que toutes les rangées ont le même nombre de buses et que toutes les colonnes ont le même nombre de buses, ce qui revient à dire que le nombre de buses dans chaque rangée correspond au nombre de colonnes et que le nombre de buses dans chaque colonne corresponds au nombre de rangées.

Dans le cas des têtes d'impression représentées à la figure 2, compte tenu de la compacité de l'implantation des buses 14 sur la tête d'impression 10, un seul passage, c'est-à-dire un aller, permet d'appliquer un faisceau continu de produit de revêtement de largeur $\ell 15$ sur une surface S à revêtir, ou une partie de celle-ci.

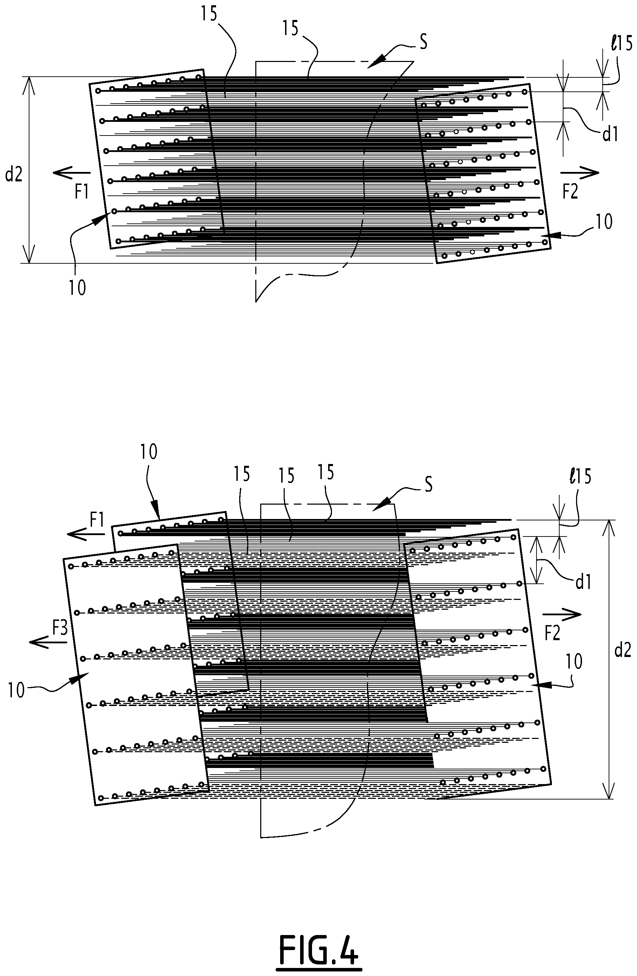

Dans la configuration représentée au milieu de la figure 3 et en partie supérieure de la figure 4, la largeur $\ell 15$ vaut la moitié de la distance d1 et le revêtement d'une surface S à revêtir, ou d'une partie de celle-ci, a lieu en déplaçant la tête d'impression 10 dans un mouvement aller, dans le sens de la flèche F1, puis dans un mouvement retour, dans le sens inverse de la flèche F2.

Dans la configuration représentée en partie inférieure de la figure 4, la largeur $\ell 15$ est égale à un tiers de la distance d1 et le revêtement complet d'une surface S, ou d'une partie de celle-ci, a lieu grâce à un mouvement aller de la tête d'impression 10 dans le sens de la flèche F1, suivi d'un mouvement retour en sens inverse, dans le sens de la flèche F2, puis d'un nouveau mouvement aller, dans le même sens que le premier mouvement aller, dans le sens de la flèche F3.

L'invention peut être mise en œuvre dans les diverses configurations de la tête d'impression 10 envisagées ci-dessus, avec un nombre d'aller ou d'aller retour qui dépend de la compacité de la tête d'impression, donc de la configuration utilisée. Dans la suite de cette description, on considère que la tête d'impression 10 comprend n rangées et m colonnes de buses 14. Par exemple, avec une tête d'impression inclinée comme représenté en partie médiane de la figure 3, on connaît, en fonction de la répartition de ces rangées et colonnes 16 et 18 et de l'angle d'inclinaison $\alpha$ du corps 12 par rapport à la direction d'avance de la tête d'impression représentée par la flèche F1, F2 ou F3, la distance d1 entre deux rangées de buses, ainsi que la largeur $\ell 15$ d'un faisceau 15, ce qui permet de déduire le nombre d'aller-retour à réaliser pour revêtir complétement la surface S ou une partie de celle-ci, à savoir :

- pour une tête compacte telle que représentée en partie basse de la figure 2, le nombre d'aller est de 1 et le nombre de retour est de 0,
- pour une tête non compacte pour laquelle le rapport d1/$\ell 15$ est de 2, comme représenté en partie médiane de la figure 3 ou en partie supérieure de la figure 4, le nombre d'aller est de 1 et le nombre de retour est de 1,
- pour une tête non compacte pour laquelle le rapport d1/$\ell 15$ est de 3, comme représenté en partie basse de la figure 4, le nombre d'aller est de 2 et le nombre de retour est de 1.

D'autres nombres d'aller et de retour de la tête d'impression sont envisageables, en fonction de la configuration de la tête d'impression 10. Par exemple, avec une tête d'impression inclinée comme représenté en partie basse de la figure 3, on connaît, en fonction de la répartition des rangées et colonnes 16 et 18 et de l'angle d'inclinaison $\beta$ du corps 12 par rapport à la direction d'avance de la tête d'impression représentée par la flèche F1, la distance d1 entre deux buses consécutives d'une même rangée, ainsi que la largeur $\ell$15 du trait déposé par une buse 15, ce qui permet de déduire le nombre d'aller-retour à réaliser.

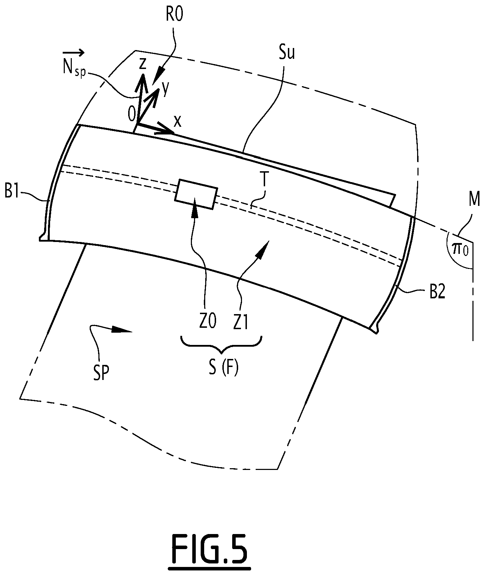

Le procédé de l'invention est maintenant décrit en référence aux figures 5 et suivantes.

On considère comme surface à revêtir S la moitié gauche de la surface supérieure du toit de la carrosserie du véhicule représenté à la figure 1. Comme visible à la figure 5, cette surface S est délimitée par un bord avant B1 et par un bord arrière B2 du toit et délimitée par une ligne médiane M qui est la trace du plan $\pi$0 sur le dessus de ce toit. A la figure 5, la ligne en trait d'axe représente la trace de la moitié droite de la surface supérieure du toit.

La surface à revêtir S comprend une zone Z1 à revêtir, ainsi qu'une zone Z0 à ne pas revêtir. D'autre part, les bords B1 et B2 sont considérés comme n'étant pas à revêtir et ne sont représentés qu'à la figure 5, pour la clarté du dessin.

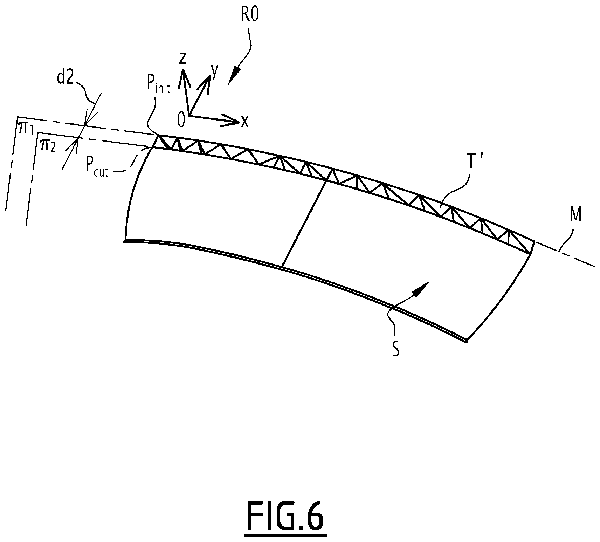

Selon une technique connue, la surface à revêtir S est modélisée par un fichier informatique F qui, dans l'exemple, est au format STL. Ce format permet d'approximer la surface réelle S à revêtir par un ensemble de facettes triangulaires, comme visible aux figures 6 à 9.

En variante, le format du fichier F peut être différent, par exemple le format obj ou le format vtk qui approximent la surface réelle par des facettes ou le format iges ou le format step qui représentent la forme mathématique de la surface à revêtir S.

Dans un premier temps, il convient de définir la trajectoire de la tête d'impression 10 et son orientation vis-à-vis de la surface à revêtir S modélisée par le fichier F. Les contraintes de cette trajectoire sont de différents ordres :

- elles sont liées au robot 20 qui déplace la tête d'impression 10 et qui peut être un robot multiaxes, un robot réciprocateur, une table traçante ou un bras manipulateur ;
- elles sont liées à la tête d'impression 10, en particulier au nombre de buses 14, à la disposition de ces buses 14 sur le corps 12, au pilotage des buses, à la taille des gouttes de produit de revêtement, etc ;
- elles sont liées à la forme de la surface S à revêtir, notamment à sa courbure, à la géométrie de ses bords, à la présence de nervures, de rainures ou de trous.

Une stratégie de calcul est mise en place pour générer la trajectoire de la tête d'impression 10 en regard de la surface S modélisée par le fichier F.

Cette stratégie de calcul est mise en œuvre dans un calculateur 40, qui est représenté à la figure 1 sous la forme d'un ordinateur et qui communique avec l'ECU 30 et avec le contrôleur 24. Ce calculateur 40 travaille hors ligne, de façon décalée dans le temps par rapport à l'application du produit de revêtement. En particulier, une partie au moins des calculs effectués par le calculateur 40 ont lieu avant l'application du produit de revêtement.

La stratégie mise en œuvre avec le calculateur 40 comprend une étape 100 de démarrage qui consiste à sélectionner, dans une bibliothèque de fichiers, des fichiers de surface représentant les zones Z1 et Z0, à déterminer les contours extérieurs de la surface S, qui sont ici les bords B1 et B2, la ligne médiane M et le bord latéral gauche de la surface S, puis à définir de façon itérative des surfaces intérieures permettant de remplir chaque portion de surface définie entre les contours extérieurs par une trajectoire en spirale ou par un mouvement de balayage.

Dans le cadre de cette stratégie, et une fois la surface S et ses contours extérieurs définis et modélisés à l'étape 100, il s'agit de définir dans un premier temps une trajectoire tridimensionnelle de la tête d'impression 10 uniquement en fonction de la surface S à revêtir et de la configuration de la tête d'impression 10, en effectuant un aller ou des allersretours. Cette opération, ainsi que les autres opérations qui font partie du procédé de l'invention et qui sont décrites ciaprès, sont mises en œuvre automatiquement par le calculateur 40. Le calculateur 40 forme ainsi un générateur automatique de trajectoire pour le robot 20.

Afin de faciliter la détermination de la trajectoire du robot, on impose dans les calculs effectués par le calculateur 40 que la tête d'impression 10 reste plutôt orientée dans un sens prédéfini, par exemple dans le sens d'un mouvement aller, en s'appuyant sur des éléments simples présélectionnés tels que des points, des segments ou un bord.

Dans une première étape 102, il est procédé à une « découpe » d'une tranche à revêtir, dans la surface à revêtir S, plus précisément dans le fichier F qui modélise la surface S.

Comme représenté aux figures 5, 11 et 12, l'étape de démarrage 100 du procédé de l'invention comprend une première sous-étape 1001 d'initialisation dans laquelle un index d'itération i est fixé à la valeur 0 et une sous-étape 1002 où le fichier F est adapté à la surface S, à partir notamment des bords B1, B2 et M de la surface S et des zones Z1 et Z0, de même qu'une surface support SP située dans le même espace de calcul que la surface S et qui présente une géométrie simple définie par des éléments géométriques simples, tels que des points, des segments et des faces.

Dans l'exemple des figures, la surface SP est une surface plane et rectangulaire située au voisinage de la surface S.

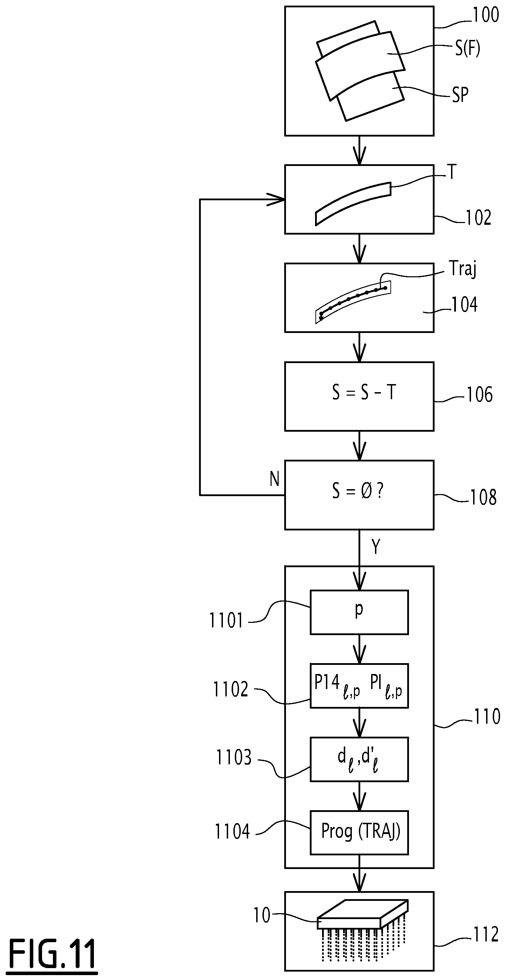

Sur les figures 11 à 13, les paramètres indiqués entre parenthèses à la suite d'une grandeur identifiée dans une étape ou une sous-étape indiquent les paramètres pris en compte pour définir cette grandeur.

Par convention, les trois axes orthogonaux d'un repère orthogonal sont dénommés axes des abscisses, axe des ordonnées et axe des hauteurs.

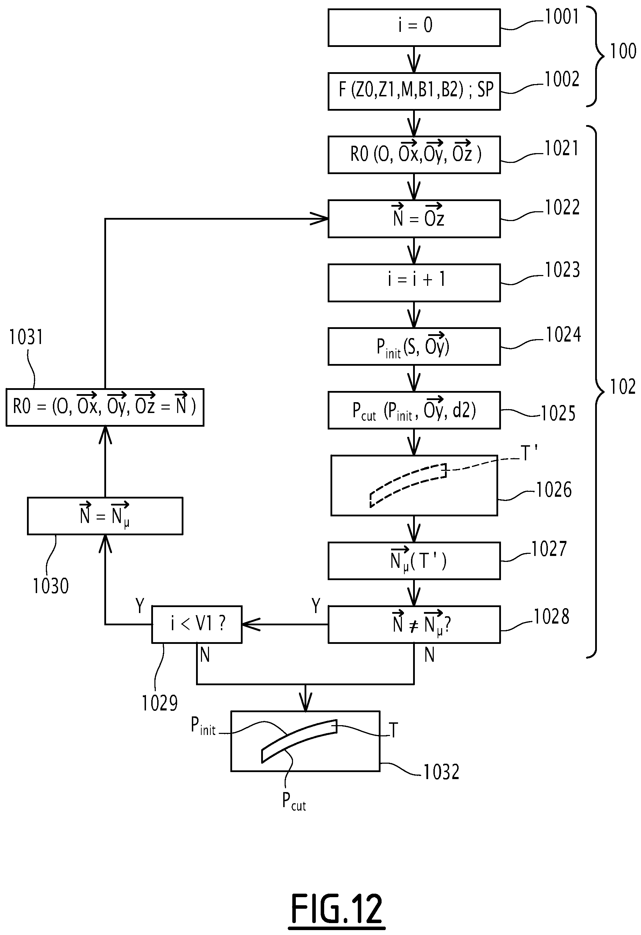

L'étape 102 du procédé de l'invention consiste à définir, par le calcul et à partir du fichier F, une tranche T de la surface à revêtir S. Cette étape 102 est détaillée à la figure 12 et comprend une première sous-étape 1021 dans laquelle le calculateur 40 définit un premier repère orthogonal R0 dont l'origine O est un point sélectionné par l'utilisateur dans la surface de support SP, par exemple avec un pointeur tel qu'une souris. L'axe des hauteurs $\overrightarrow{Oz}$ du premier repère orthogonal R0 est initialement fixé, dans cette sous-étape 1021, comme étant égal à une normale $\overrightarrow{Nsp}$ à la surface de support SP au point d'origine O. D'autre part, l'axe des ordonnées $\overrightarrow{Oy}$ du premier repère orthogonal O est fixé comme égal au produit vectoriel normalisé de l'axe des hauteurs $\overrightarrow{Oz}$ et d'un axe aligné sur une direction d'avance sélectionnée par l'utilisateur, par le biais d'un segment SU de la surface de support SP sélectionné par l'utilisateur, par exemple avec un pointeur, comme correspondant approximativement à une direction d'avance de la tête d'impression 10 le long de la ligne médiane M. Enfin, l'axe des abscisses $\overrightarrow{Ox}$ du repère R0 est fixé comme étant égal au produit vectoriel normalisé, de l'axe des ordonnées $\overrightarrow{Oy}$ et de l'axe des hauteurs $\overrightarrow{Oz}$.

En variante, l'utilisateur peut sélectionner le point d'origine O sur une autre surface, en l'occurrence la surface S ou dans les zones Z1 et Z0. La détermination du premier repère orthogonal R0 est alors adaptée en conséquence.

Globalement, le procédé de l'invention permet de faire progresser la tête d'impression 10 parallèlement au segment Su, en adaptant la position de cette tête d'impression en fonction du modèle géométrique de la surface S constitué par le fichier F.

On considère une grandeur dénommée « normale moyenne » et notée $\overrightarrow{N}$. Dans une sous-étape suivante 1022 de l'étape 102, le calculateur 40 initialise cette normale moyenne comme égale à l'axe des hauteurs $\overrightarrow{Oz}$ du premier repère orthogonal.

Dans une sous-étape suivante 1023, l'index i est augmenté d'une unité.

Dans une sous-étape suivante 1024, le calculateur 40 définit, dans le premier repère orthogonal R0, un point $P_{init}$ comme un point de la surface à revêtir S dont l'ordonnée y est, dans le premier repère orthogonal R0, la plus élevée parmi celles des points de la surface à revêtir. En d'autres termes, comme visible à la figure 6, le point $P_{init}$ est le plus « avancé » selon l'axe des ordonnées $\overrightarrow{Oy}$, dans le repère R0, parmi les points de la surface à revêtir S. Comme indiqué schématiquement par les parenthèses à la figure 12, le point $P_{init}$ est défini en fonction de la surface S et de l'axe des ordonnées $Oy$.

A partir du point $P_{init}$, le calculateur 40 définit, dans une sous-étape 1025 ultérieure, un autre point $P_{cut}$ comme un point de la surface à revêtir S qui est situé, par rapport au point initial $P_{init}$, à une distance d2 mesurée selon l'axe des ordonnées $\overrightarrow{Oy}$ et dans un sens négatif selon cet axe. Ce deuxième point $P_{cut}$ est dénommé point de coupure car il correspond à une découpe virtuelle de la surface à revêtir S. Plus précisément, on considère une tranche temporaire T' de la surface à revêtir qui est définie entre deux plans π1 et π2 passant respectivement par le point initial $P_{init}$ et par le point de coupure $P_{cut}$ et qui sont tous deux perpendiculaires à l'axe des ordonnées $\overrightarrow{Oy}$, c'est-à-dire parallèles aux axes des abscisses $\overrightarrow{Ox}$ et des hauteurs $\overrightarrow{Oz}$. Cette tranche temporaire T' est visible à la figure 6. Sa largeur, mesurée le long de l'axe $\overrightarrow{Oy}$ est égale à la distance d2.

Dans l'exemple de la partie médiane de la figure 3 et de la figure 4, la distance d2 est choisie égale au nombre n de rangées 16 de buses 14 multiplié par la distance d1 entre deux rangées. Dans l'exemple de la partie basse de la figure 3, la distance d2 est choisie égale au nombre n de rangées 16 de buses 14 multiplié par le nombre m de colonnes 18 de buses multiplié par la distance d1 entre deux traits de buse. Ainsi, la distance d2 est égale à la largeur totale des faisceaux 15 appliquée lors d'un aller-retour dans la configuration représentée en partie haute de la figure 4 et à la largeur totale des faisceaux 15 appliquée lors d'un aller-retour suivi d'un aller dans la configuration représentée en partie basse de la figure 4. Comme la distance d1, la distance d2 dépend des largeurs ℓ15 et ℓ17 des faisceaux 15 et des espaces 17, donc de la valeur de l'angle α ou β. Dans tous les cas, la distance d2 est un multiple de la distance d1.

Ensuite, le calculateur 40 calcule, lors d'une sous-étape 1027, la normale moyenne $\overrightarrow{N\mu}$ à la surface à revêtir S entre les deux plans π1 et π2, c'est-à-dire sur la tranche temporaire T'.

Postérieurement à la sous-étape 1027, le calculateur 40 compare, dans une sous-étape 1028, la normale moyenne $\overrightarrow{N}$ définie à l'étape 1022 et la normale moyenne $\overrightarrow{N\mu}$ définie à l'étape 1027. Cette comparaison entre deux vecteurs peut être effectuée de plusieurs façons, par exemple en déterminant un angle entre ces deux normales, en effectuant leur produit scalaire. Dans le cas d'une comparaison au moyen d'un angle déterminé entre ces vecteurs, ces vecteurs sont considérés comme identiques si la valeur absolue de cet angle est inférieure à une valeur limite et comme différente si la valeur absolue de cet angle est supérieure à cette valeur limite. Cette valeur limite peut être choisie entre $10^{-9\circ}$ et $10°$, de préférence égale à $10^{-10}$.

En fonction du résultat de cette comparaison de la sous-étape 1028, différentes sous-étapes sont mises en œuvre par le calculateur 40.

Si le résultat de la comparaison de la sous-étape 1028 est que les deux normales moyennes sont différentes, alors il est procédé, dans une sous-étape 1029, à la vérification du fait que l'index i est strictement inférieur ou égal à une valeur de seuil V1. Si tel est le cas, alors la variable $\vec{N}$ prend la valeur $\vec{N\mu}$ dans une sous-étape 1030, puis le premier repère orthogonal R0 est redéfini à l'étape 1031, de manière proche de l'étape 1021, mais selon la séquence ordonnée suivante : L'axe des ordonnées $\vec{Oy}$ du nouveau repère orthogonal R0 est obtenu en normalisant le vecteur résultat du produit vectoriel entre $\vec{N}$ et l'axe des abscisses $\vec{Ox}$ du premier repère orthogonal R0. L'axe des hauteurs $\vec{Oz}$ du nouveau repère orthogonal R0 est fixé égal à $\vec{N}$. L'axe des abscisses $\vec{Ox}$ du nouveau repère orthogonal R0 est obtenu en normalisant le vecteur résultat du produit vectoriel entre $\vec{N}$ et l'axe des ordonnées $\vec{Oy}$ du nouveau repère orthogonal R0. Ensuite, les sous-étapes 1022 à 1028 sont à nouveau mises en œuvre jusqu'à ce que les vecteurs $\vec{N}$ et $\vec{N\mu}$ soient considérés comme égaux à l'étape 1028 ou que le nombre maximum d'itérations V1 soit atteint, auquel cas le calculateur 40 définit comme tranche T de la surface à revêtir la dernière tranche temporaire T' définie lors de la dernière sous-étape 1026 mise en œuvre. Ceci a lieu lors d'une sous-étape 1032 qui est la sous-étape finale de l'étape 102 du procédé de l'invention.

En pratique, la valeur seuil V1 qui est le nombre maximum d'itérations au sein de l'étape 102, peut être choisie entre 1 et 20, de préférence égale à 5.

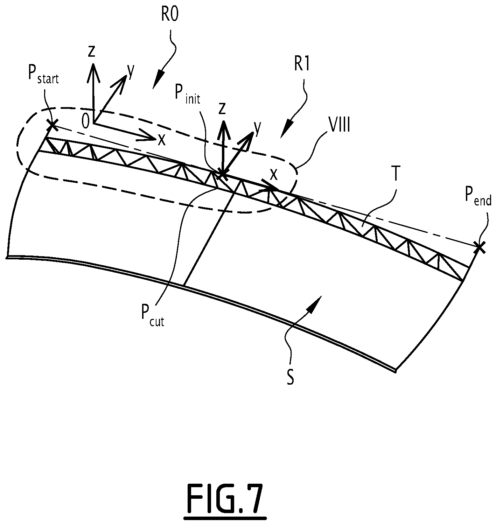

En synthèse, l'étape 102 a permis de « découper » une tranche T dans la surface S, cette tranche étant bien définie, entre les premier et deuxième plans π1 et π2 passant respectivement par les points P$_{init}$ et P$_{cut}$, lesquels points ne sont pas forcément situés sur un bord de la surface S mais peuvent être situés dans une portion intermédiaire de celle-ci, à distance des bords B1 et B2 et comme visible à la figure 7, suite à la mise en œuvre itérative des sous-étapes 1022 à 1031.

Une fois la tranche T déterminée au cours de l'étape 102, le procédé de l'invention définit, par un calcul automatique et par itérations, au cours d'une étape 104, une trajectoire Traj à suivre par la tête d'impression en regard de cette tranche T.

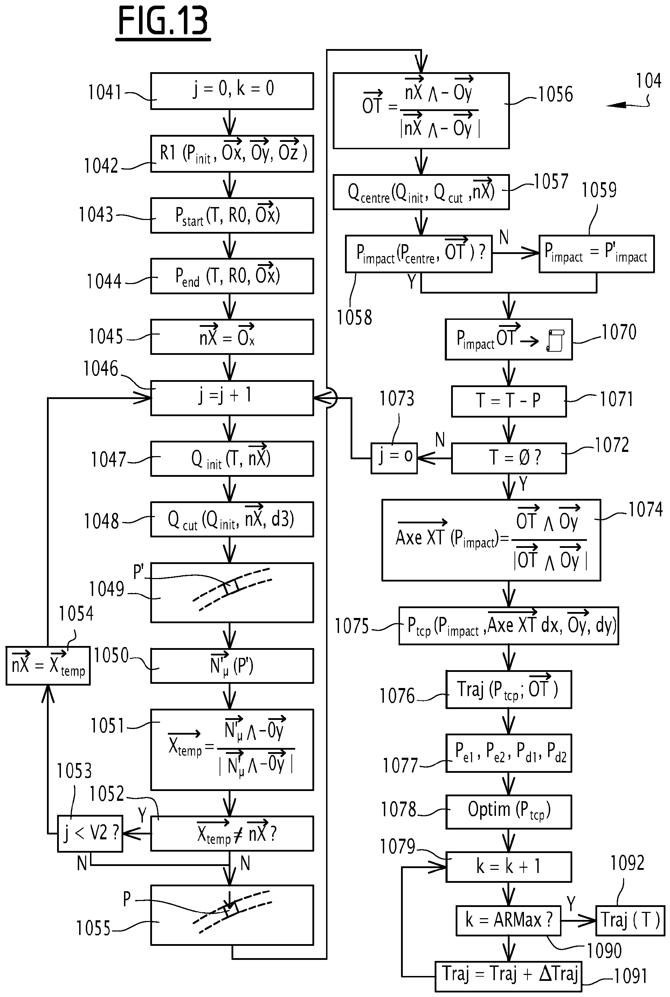

L'étape 104 est détaillée à la figure 13 et comprend une première sous-étape 1041 d'initialisation par mise à zéro de deux index j et k.

Au cours d'une sous-étape suivante 1042, le calculateur 40 définit un deuxième repère orthogonal R1 dont l'origine est le point initial P$_{init}$ défini à la dernière sous-étape 1024 mise en œuvre et dont les axes des abscisses et des ordonnées et des hauteurs sont respectivement les mêmes que ceux de la dernière version du premier repère orthogonal R0 défini à l'étape 1021 ou à l'étape 1031.

Dans une sous-étape suivante 1043, le calculateur 40 définit un troisième point P$_{start}$, qualifié de « point de départ ». Ce troisième point est la projection sur l'axe des abscisses $\vec{Ox}$ du deuxième repère orthogonal R1 d'un point de la tranche à revêtir T dont l'abscisse est la plus petite dans le premier repère orthogonal R0.

De la même façon, dans une sous-étape 1044, le calculateur 40 définit un quatrième point P$_{end}$, qualifié de « point d'arrivée ». Ce quatrième point est la projection sur l'axe des abscisses $\vec{Ox}$ du deuxième repère orthogonal R1 d'un point de la tranche à revêtir T dont l'abscisse est la plus grande dans le premier repère orthogonal R0.

Les troisième et quatrième points peuvent être utilisés pour identifier un sens d'avance de la tête d'impression 10.

L'ordre des sous-étapes 1043 et 1044 peut être inversé. En variante, ces sous-étapes ont lieu simultanément. Selon une autre variante, les étapes 1043 et 1044 ne sont pas mises en œuvre.

Les troisième et quatrième points sont visibles à la figure 7, de même que les deux repères R0 et R1.

Dans une sous-étape 1045, le calculateur 40 initialise une variable $\vec{nX}$ que l'on peut qualifier de nouvel axe X, comme étant l'axe des abscisses du deuxième repère orthogonal R1. Cette sous-étape 1045 peut avoir lieu avant ou après les sous-étapes 1043 et 1044, voire en même temps.

Ensuite, dans une sous-étape 1046, l'index j est incrémenté d'une unité.

Dans une sous-étape suivante 1047, le calculateur 40 définit, dans le deuxième repère orthogonal R1, un cinquième point Q$_{init}$, que l'on peut qualifier de point initial de la tranche, comme étant un point de la tranche T dont l'abscisse dans le deuxième repère orthogonal R1 est la plus petite parmi les points de la tranche à revêtir. En d'autres termes, dans cette sous-étape 1047, le cinquième point Q$_{init}$ est défini comme le point de la tranche T le moins avancé selon l'axe des abscisses dans le deuxième repère orthogonal R1.

Lors d'une sous-étape suivante 1048, le calculateur 40 définit un sixième point Q$_{cut}$, qui peut être qualifié de point de coupure de la tranche T et qui est un point de cette tranche situé, par rapport au cinquième point et le long du nouvel axe $\vec{nX}$ à une distance donnée d3. Cette distance d3 peut être, par exemple, égale à la longueur L10 de la tête d'impression 10 mesurée parallèlement à une rangée 16. En variante, cette distance d3 peut être très inférieure à cette longueur, par exemple égale au dixième de cette longueur, ou très supérieure à cette longueur, par exemple égale à cent fois cette longueur. En pratique, la distance d3 peut être choisie en fonction de la courbure locale de la tranche T de la surface à revêtir S vis-à-vis de la longueur L10 de la tête d'impression 10, cette courbure pouvant être calculée à partir du fichier F.

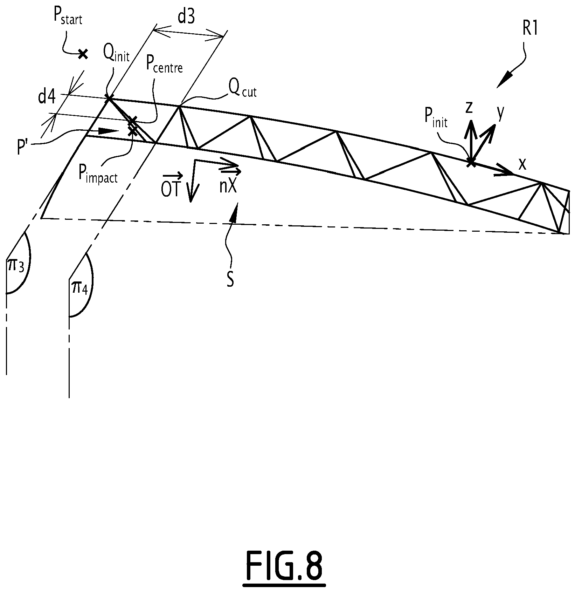

Dans une sous-étape suivante 1049, le calculateur 40 définit une portion temporaire P' de la tranche T comme étant la portion de cette tranche comprise entre un troisième plan π3 et un quatrième plan π4 perpendiculaires au nouvel axe $\vec{nX}$ et passant respectivement par les cinquième et sixième points Q$_{init}$ et Q$_{cut}$. Cette portion P' de la tranche T est visible à la figure 8.

Lorsqu'une portion temporaire P' de la tranche T a été définie à la sous-étape 1049, comme indiqué ci-dessus, la

normale moyenne $\overrightarrow{N'\mu}$ à cette portion P' est calculée dans une sous-étape 1050.

Dans une sous-étape suivante 1051, le calculateur 40 calcule une variable d'axe longitudinal temporaire $\overrightarrow{Xtemp}$ égale au produit vectoriel de la normale moyenne $\overrightarrow{N\mu}$ calculé à la sous-étape 1050 et de l'opposé $-\overrightarrow{Oy}$ de l'axe des ordonnées $\overrightarrow{Oy}$ du deuxième repère orthogonal R1, ce produit vectoriel étant normalisé, c'est-à-dire ramené à une longueur égale à 1.

Dans une sous-étape suivante 1052, le calculateur 40 compare le nouvel axe des abscisses $\overrightarrow{nX}$ défini précédemment et l'axe longitudinal temporaire $\overrightarrow{Xtemp}$ défini à l'étape 1051. La méthode de comparaison peut être la même que celle mise en œuvre à l'étape 1028 mentionnée ci-dessus en référence à la sous-étape 1028, ou une méthode différente permettant de comparer deux vecteurs.

Si le résultat de la comparaison de l'étape 1052 est que les deux vecteurs comparés sont différents, alors une sous-étape 1053 est mise en œuvre dans laquelle l'index j est comparé à une valeur de seuil V2. Si cet index est strictement inférieur à la valeur de seuil V2, alors le nouvel axe $\overrightarrow{nX}$ prend la valeur *Xtemp* dans une sous-étape 1054 et l'étape 104 est reprise à la sous-étape 1046 pour revenir à la sous-étape 1052. Un procédé par itérations est ainsi mis en œuvre, pour j compris entre 1 et V2, tant que les vecteurs $\overrightarrow{Xtemp}$ et $\overrightarrow{nX}$ sont différents.

Si les vecteurs $\overrightarrow{Xtemp}$ et $\overrightarrow{nX}$ sont détectés comme égaux à l'étape 1052, ou si le nombre maximum d'itérations V2 est atteint à la sous-étape 1053, alors une nouvelle sous-étape 1055 est mise en œuvre dans laquelle une portion P de la tranche à revêtir T est définie comme égale à la dernière portion temporaire P' définie à la dernière sous-étape 1049 mise en œuvre.

Ainsi, les sous-étapes 1041 à 1055 permettent de définir, par itérations, une portion P de la tranche T découpée entre les points $Q_{init}$ et $Q_{cut}$ par lesquels passent des plans π3 et π4 perpendiculaires au nouvel axe des abscisses $\overrightarrow{nX}$.

Comme la valeur seuil V1, la valeur seuil V2 peut être choisie par l'utilisateur. En pratique, elle peut être comprise entre 1 et 20, de préférence égale à 5.

Après l'étape 1055, une sous-étape 1056 est mise en œuvre dans laquelle le calculateur 40 calcule un vecteur $\overrightarrow{OT}$ d'orientation de la tête d'impression 10, lequel est égal au produit vectoriel normalisé du nouvel axe des abscisses $\overrightarrow{nX}$ et de l'opposé $-\overrightarrow{Oy}$ de l'axe des ordonnées $\overrightarrow{Oy}$ du deuxième repère orthogonal R1.

Dans une sous-étape suivante 1057, le calculateur 40 calcule la position d'un septième point $P_{centre}$, dit point de centre, lequel est situé à mi-distance entre les projections orthogonales des cinquième et sixième points $Q_{init}$ et $Q_{cut}$ sur une droite passant par le cinquième point $Q_{init}$ et de vecteur directeur égal au nouvel axe $\overrightarrow{nX}$. Ce point de centre $P_{centre}$ est décalé, par rapport à cette droite passant par ces deux points, d'une troisième distance d4 mesurée selon l'axe des ordonnées $\overrightarrow{Oy}$ du deuxième repère orthogonal R1, dans un sens négatif selon cet axe. Cette troisième distance d4 est choisie égale à la moitié de la première distance d2, de sorte que le point $P_{centre}$ est à peu près à mi-distance entre les premier et deuxième plans Π1 et Π2 mentionnés ci-dessus.

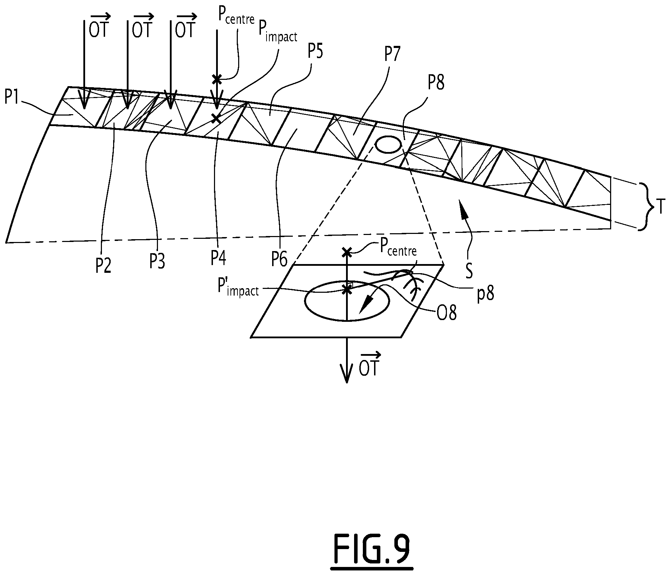

Dans une sous-étape 1058 suivante, le septième point $P_{centre}$ est projeté selon une droite dont le vecteur directeur est le vecteur d'orientation $\overrightarrow{OT}$ sur la portion P de la tranche T sous la forme d'un huitième point $P_{impact}$, dit point d'impact. A la sous-étape 1058, ce huitième point $P_{impact}$ n'est créé que s'il y a intersection entre la droite de vecteur directeur $\overrightarrow{OT}$ et de point d'application $P_{centre}$, et la portion P de la tranche T, qui comprend une zone pleine, c'est-à-dire de la matière, en regard du septième point, vis-à-vis de l'axe d'orientation $\overrightarrow{OT}$. Tel est le cas pour les sept premières portions P1 à P7 de la tranche T représentées à la figure 9.

Selon une variante non représentée de la méthode de l'invention, le huitième point $P_{impact}$ peut être défini sans utiliser le septième point $P_{centre}$, mais en considérant une droite imaginaire constituée par l'intersection d'un premier plan imaginaire et d'un deuxième plan imaginaire. Le premier plan imaginaire est situé à mi-distance entre les plans Π1 et Π2, alors que le deuxième plan imaginaire est situé à mi-distance entre les plans Π13 et Π14. Le point $P_{impact}$ existe si cette droite imaginaire coupe une zone plein de la portion P de la tranche T.

Dans le cas de la huitième portion P8 représentée dans le zoom de la figure 9, la projection du septième point tombe dans un orifice O8 qui traverse la portion P8. Dans ce cas, il est défini un point $P'_{impact}$, alternatif au huitième point $P_{impact}$. Pour définir ce point alternatif $P'_{impact}$, le calculateur 40 considère un neuvième point, à savoir le point extrême p8 de la portion P8 qui est le plus éloigné dans le sens opposé au vecteur d'orientation de tête $\overrightarrow{Of}$. Dans l'exemple de la figure 9, ce neuvième point p8 est situé au « sommet » d'une bosse de la portion P8. Ce point p8 est alors projeté perpendiculairement sur un axe passant par le point $P_{centre}$ et parallèle à l'axe d'orientation de tête $\overrightarrow{Ot}$. Le résultat de cette projection est défini comme étant le un dixième point $P'_{impact}$, alternatif au huitième point $P_{impact}$. Comme le huitième point $Pi_{mpact}$ ne peut pas être construit selon l'approche mentionnée à l'étape 1058, alors le huitième point $P_{impact}$ est assimilé, dans une sous-étape 1059, au dixième point $P'_{impact}$. En d'autres termes, dans ce cas, le huitième point $Pi_{mpact}$ est considéré comme égal au dixième point $P'_{impact}$.

Au terme des sous-étapes 1058 et 1059, le huitième point $Pi_{mpact}$ et l'axe d'orientation $\overrightarrow{OT}$ sont mémorisés par le calculateur 40, dans une mémoire associée à ce calculateur, qui n'est pas représentée.

Selon une variante non représentée de la méthode de l'invention, la détermination du huitième point $Pi_{mpact}$ est systématiquement mise en œuvre comme expliqué ci-dessus pour le cas de la huitième portion P8. En d'autres termes, il est indifférent que la droite passant par le septième point $P_{centre}$ ou la droite imaginaire intersecte ou non une partie pleine de la portion P1, P2 , ... considérée. Le dixième point P'$_{impact}$ est utilisé de façon systématique.

Ainsi, les sous-étapes 1056 à 1070 permettent de calculer et de mémoriser un point d'impact théorique d'un jet de produit de revêtement sur la portion P définie à la sous-étape 1055, ainsi qu'un axe $\overrightarrow{OT}$ d'orientation de la tête d'impression pour ce point d'impact.

Dans une sous-étape suivante 1071, la portion P de la tranche T dans laquelle le point d'impact et le vecteur d'orientation ont été calculés est retirée de la tranche T et l'étape 104 est reprise à la sous-étape 1046, après réinitialisation de l'index j à la valeur zéro, dans une sous-étape 1073.

Comme le montre la sous-étape 1072 à la figure 13, la succession des sous-étapes 1046 à 1071 est mise en œuvre tant que la tranche T présente une aire non nulle.

En variante, la réduction de la tranche T de la surface à revêtir S effectuée à l'étape 1071, en retirant la portion P définie à l'étape 1055, peut être remplacée par une sous-étape au cours de laquelle on retire de la tranche T une fraction de celle-ci qui commence au point Q$_{init}$ et s'étend sur une distance d'avance dAvance qui est définie par l'utilisateur. Pour ce faire, le calculateur 40 part du point Q$_{init}$ et ajoute la distance dAvance selon le nouvel axe $\overrightarrow{nX}$ puis le calculateur 40 remplace la tranche T par la partie de la tranche qui se situe au-delà de la distance dAvance par rapport au point Q$_{init}$.

Que ce soit au moyen du retrait de la portion P identifiée à l'étape 1055 ou au moyen de la partie déterminée à partir des variables Q$_{init}$, $\overrightarrow{nX}$ et dAvance, une fraction de la tranche T est retirée à l'étape 1071.

On comprend que le processus itératif mis en œuvre entre les sous-étapes 1046 et 1072 permet de traiter petit à petit la tranche T, de stocker, lors de l'étape 1070, un point et un axe pour chaque portion considérée, P ou équivalente, de la tranche T.

On est alors à la configuration de la figure 9 où un point d'impact Pi$_{mpact}$ ou un point d'impact alternatif P'$_{impact}$ est défini pour chaque portion de surface P1, P2, ..., avec un axe d'orientation en ce point, $\overrightarrow{OT}$.

Lorsque toute la superficie de la tranche T a fait l'objet du traitement des sous-étapes 1046 à 1071, c'est-à-dire lorsque la sous-étape 1072 détermine que la tranche T est d'aire nulle, le calculateur 40 détermine, pour chaque huitième point et dans une sous-étape 1074, un vecteur d'axe $\overrightarrow{AxeXT}$ de la tête d'impression 10 en ce point d'impact comme égal au produit vectoriel normalisé du vecteur $\overrightarrow{OT}$ d'orientation de la tête d'impression 10 en ce point et de l'axe des ordonnées $\overrightarrow{Oy}$ du deuxième repère orthogonal R1.

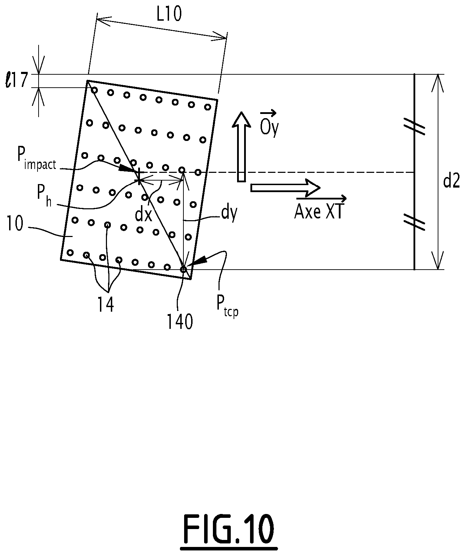

Dans une sous-étape suivante 1075, le calculateur 40 définit, à partir du huitième point P$_{impact}$, un point remarquable P$_{tcp}$ à atteindre, dit point de centre de l'outil ou en Anglais « tool center point », qui est un point de référence pour le positionnement de la tête d'impression 10 dans l'espace. Plus précisément, comme représenté à la figure 10, on considère que le huitième point Pi$_{mpact}$ est situé, en regard de la tête d'impression 10, à mi-largeur de la distance d2 définie comme ci-dessus et dans une position telle que les points Pi$_{mpact}$ et P$_h$ sont alignés selon l'axe $\overrightarrow{Oy}$. On considère une buse de référence 140 parmi les buses 14, par exemple la buse située dans le coin inférieur droit de la tête d'impression 10 à la figure 10. Cette buse 140 peut être définie comme le point de centre de l'outil ou point P$_{tcp}$. On note dx le décalage, parallèlement au vecteur axe $\overrightarrow{AxeXT}$, entre les points P$_h$ et P$_{tcp}$. Comme les points P$_{impact}$ et P$_h$ sont alignés selon l'axe $\overrightarrow{Oy}$, le décalage dx est aussi le décalage parallèlement au vecteur axe $\overrightarrow{AxeXT}$, entre les points P$_{impact}$ et P$_{tcp}$. On note dy le décalage entre les points P$_{impact}$ et P$_{tcp}$ parallèlement à l'axe des ordonnées $\overrightarrow{Oy}$ du deuxième repère orthogonal R1, dans un sens négatif.

Dans ces conditions, la position de la buse de référence 140 peut être considérée comme la position du point remarquable P$_{tcp}$ qui s'exprime en fonction de la position du point d'impact P$_{impact}$ suivant la relation :

$$P_{tcp} = P_{impact} + dx \times \overrightarrow{AxeXT} - dy \times \overrightarrow{Oy} \qquad \text{(Equation 1)}$$

Lorsqu'un point P$_{tcp}$ est défini, il est inclus, avec l'axe d'orientation de tête $\overrightarrow{OT}$ dans le fichier Traj de la trajectoire à suivre par la buse de référence 140 en regard de la tranche T de la surface à revêtir S, ceci au cours d'une sous-étape 1076 postérieure à l'étape 1075. Les différents points remarquables P$_{tcp}$ et les différents axes d'orientation tête $\overrightarrow{OT}$, correspondant au différentes portions P ou fractions de la tranche T, sont ainsi successivement enregistrés dans le fichier de trajectoire Traj.

En variante, les sous-étape 1074 à 1076 peuvent être mises en œuvre entre les sous-étapes 1070 et 1071, voire simultanément à l'étape 1070.

Selon une sous-étape optionnelle de l'invention 1077, il est possible d'ajouter au début du fichier de trajectoire Traj au moins un point supplémentaire d'engagement et au moins un point supplémentaire de dégagement de la tête d'impression sur la trajectoire à effectuer le long de la tranche T. En pratique, deux points supplémentaires d'engagement, P$_{e1}$ et P$_{e2}$, et deux points supplémentaires de dégagement, P$_{d1}$ et P$_{d2}$, sont incorporés dans le fichier de trajectoire élaboré pour chaque tranche T. Les deux points d'engagement P$_{e1}$ et P$_{e2}$ sont colinéaires avec les deux premiers points P$_{tcp}$ de la trajectoire Traj et situés à une distance paramétrable de ces deux premiers points. De même, les deux points de dégagement P$_{d1}$ et P$_{d2}$ sont colinéaires avec les deux derniers points P$_{tcp}$ de la trajectoire et situés à une distance paramétrable de ceux-ci. Les deux distances paramétrables utilisées pour les points d'engagement et de dégagement peuvent être identiques ou différentes.

Dans le cas où le fichier de trajectoire généré pour une tranche T contient un seul point $P_{tcp}$, alors on utilise l'axe $\overrightarrow{AxeXT}$ pour définir le ou les point(s) d'engagement et le ou les point(s) de dégagement à partir de ce seul point.

En variante, et selon une approche qui apporte plus de souplesse dans la façon d'engager la tête d'impression 10 sur la trajectoire Traj, les points d'engagement $P_{e1}$ et $P_{e2}$ sont définis par le fait que les points $P_{e1}$, $P_{e2}$ et $P_{tcp}$, correspondant au premier point de la trajectoire Traj, sont colinéaires et par le fait que la droite, qui les porte, est parallèle au vecteur défini par le produit vectoriel du premier axe d'orientation tête $\overrightarrow{OT}$ de la trajectoire Traj et de l'axe des ordonnées $\overrightarrow{Oy}$ du deuxième repère orthogonal R1. De même, et selon une approche qui apporte plus de souplesse dans la façon de désengager la tête d'impression 10 de la trajectoire Traj, les points de dégagement $P_{d1}$, $P_{d2}$ sont définis par le fait queque les points $P_{d1}$, $P_{d2}$ et $P_{tcp}$, correspondant au dernier point de la trajectoire Traj, sont colinéaires et par le fait que la droite, qui les porte, est parallèle au vecteur défini par le produit vectoriel du dernier axe d'orientation tête $\overrightarrow{OT}$ de la trajectoire Traj et de l'axe des ordonnées $\overrightarrow{Oy}$ du deuxième repère orthogonal R1.

Le nombre de points d'engagement et de dégagement n'est pas forcément égal à deux. Comme mentionné ci-dessus, il peut être égal à 1. Il peut également être supérieur ou égal à 3. Le nombre de points d'engagement n'est pas forcement égal au nombre de points de dégagement.

Dans une sous-étape ultérieure 1078, le calculateur 40 procède à une optimisation du nombre de points $P_{tcp}$ du fichier de trajectoire Traj. Dans ce cadre, si trois points $P_{tcp}$ successifs du fichier de trajectoire sont colinéaires et si leurs axes d'orientation $\overrightarrow{OT}$ sont parallèles, alors le point remarquable $P_{tcp}$ intermédiaire est supprimé du fichier de trajectoire, de même que le vecteur d'orientation tête $\overrightarrow{OT}$ associé à ce point. Cette sous-étape d'optimisation permet de réduire le nombre de points $P_{tcp}$ de la trajectoire en fonction de la colinéarité de ces points dans l'espace et d'éviter une surcharge des capacités de calcul du calculateur 40.

La sous-étape 1078 est facultative. Elle peut être mise en œuvre ou non en fonction du nombre de points $P_{tcp}$ de chaque fichier de trajectoire Traj et des capacités de calcul du calculateur 40.

Au cours des sous-étapes 1079 à 1091 suivantes de l'étape 104, il est tenu compte du nombre d'aller-retour à effectuer pour revêtir la tranche T de la surface S. Les explications fournies ci-dessus en référence aux figures 3 et 4 s'appliquent, mutatis mutandis, au revêtement d'une tranche T de la surface S à revêtir.

On définit la valeur ARmax comme étant la somme du nombre d'aller(s) et du nombre de retour(s) à effectuer pour recouvrir la tranche T avec la tête d'impression. Dans le cas représenté en partie basse de la figure 2, ce nombre ARmax est égal à 1. Dans le cas représenté dans la partie intermédiaire de la figure 3 et en haut de la figure 4, ce nombre est égal à 2. Dans le cas représenté en partie basse de la figure 4, ce nombre est égal à 3.

L'indice k initialisé à zéro à l'étape 1041 et incrémenté de 1 à l'étape 1079 représente un numéro d'ordre du trajet à effectuer, qu'il s'agisse d'un aller, lorsque l'indice k est impair ou d'un retour, lorsque cet indice est pair. Le fichier correspondant à la trajectoire T se présente en pratique comme un tableau des points $P_{tcp}$ et des vecteurs $\overrightarrow{OT}$ associés. En passant de l'indice k-1 à l'indice k, le calculateur 40 duplique le tableau créé à l'étape 1076.

Si l'indice k est pair, le calculateur 40 inverse le tableau dupliqué, c'est-à-dire change l'ordre des points remarquables $P_{tcp}$, respectivement les vecteurs $\overrightarrow{OT}$ associés, pour que les premiers points, respectivement les premiers vecteurs, deviennent les derniers et réciproquement. Pour chaque point remarquable $P_{tcp}$, le calculateur 40 décale celui-ci dans la direction opposée à l'axe des ordonnées $\overrightarrow{Oy}$ du deuxième repère orthogonal R1, d'une distance d5 égale à la valeur de l'indice k diminuée de 1, multiplié par la largeur $\ell15$ d'un faisceau. En d'autres termes, on décale les points $P_{tcp}$ de la distance $d5 = (k - 1) \times \ell15$. L'ensemble des nouveaux points obtenus et des vecteurs d'orientation $\overrightarrow{OT}$, qui ne sont pas modifiés pour ces différents points, forme un tronçon retour de la trajectoire, le long de la tranche T. Ce nouveau tronçon $\Delta$Traj de la trajectoire Traj est ajouté à la trajectoire existante lors d'une sous-étape 1091.

Si l'indice k est impair et différent de 1, l'ordre des points $P_{tcp}$ est conservé par rapport à celui déterminé lors de la sous-étape 1076, c'est-à-dire inversé par rapport à celui du tronçon de trajectoire $\Delta$Traj déterminé pour l'indice k-1 qui est pair, et les différents points $P_{tcp}$ sont décalés, par rapport au dernier calcul effectué et dans la direction opposée à l'axe $\overrightarrow{Oy}$ du deuxième repère orthogonal R1, de la même distance d5. L'ensemble des points obtenus à cette occasion et des vecteurs d'orientation $\overrightarrow{OT}$, qui ne sont pas modifiés pour ces différents points, forme un nouveau tronçon aller de trajectoire aller, le long de la tranche T. Ce nouveau tronçon $\Delta$Traj de la trajectoire Traj est ajouté à la trajectoire existante lors de la sous-étape 1091.

Ainsi, pour l'indice k entre 2 et ARmax, chaque tronçon $\Delta$Traj ajouté à la trajectoire est calculé en inversant l'ordre des points remarquables $P_{ctp}$ définis pour le tronçon de trajectoire précédemment calculé.

Lorsque le nombre maximum d'aller(s) et de retour(s) est atteint à l'étape 1090, la trajectoire complète pour la tranche T est générée lors d'une sous-étape 1092 de l'étape 104.

Selon un aspect de l'invention qui n'est pas représenté, si une zone à ne pas revêtir est présente sur la surface S, comme représenté par la zone Z0 à la figure 5, la trajectoire du robot est ajustée pour ne pas entrer en collision avec cette zone Z0. On considère une tranche T de la surface S qui intersecte une zone à ne pas revêtir Z0. Lorsque le calculateur 40 procède aux calculs de l'étape 104 mentionnée ci-dessus, si, pour l'un des points remarquable $P_{tcp}$, sa projection $P_{tcp/proj}$; selon le vecteur d'orientation $\overrightarrow{OT}$ sur la zone Z0 à ne pas revêtir existe, et si un vecteur allant du point $P_{tcp}$ vers le point

$P_{tcp/proj}$ est dans le sens opposé au vecteur d'orientation $\overrightarrow{OT}$, le calculateur 40 considère que cela signifie que le point remarquable $P_{tcp}$ est en collision avec la zone Z0 à ne pas revêtir. Dans ce cas, un décalage, d'amplitude adaptée, est appliqué sur la position du point remarquable $P_{tcp}$ afin de l'éloigner de la surface à revêtir S, au niveau de la zone à ne pas revêtir Z0, selon une direction opposée au vecteur d'orientation $\overrightarrow{OT}$. En d'autres termes, au niveau de la zone Z0 à ne pas revêtir, la trajectoire à suivre par la tête d'impression est adaptée afin de ne pas heurter l'objet à revêtir O, c'est-à-dire pour éviter une collision entre la tête d'impression 10 et cet objet.

L'approche mise en œuvre, au niveau de la zone Z0 à ne pas revêtir, pour éviter une collision entre la tête d'impression 10 et l'objet à revêtir O peut également être mise en œuvre pour la zone à revêtir Z1. Lorsque l'étape 104 a été mise en œuvre, avec éventuellement une adaptation au niveau d'une zone Z0 à ne pas revêtir comme mentionné ci-dessus, une étape 106 est mise en œuvre par le calculateur 40 qui consiste à retirer automatiquement du fichier de modélisation F, par le calcul, la tranche à revêtir T prise en compte lors des étapes 102 et 104 précédentes, avant de recommencer à l'étape 102.

En variante, lors de l'étape 106, le calculateur 40 crée un nouveau fichier de modélisation F' qui correspond au fichier de modélisation F duquel la tranche T a été retirée. Ceci revient également à retirer la tranche T du fichier F.

En d'autres termes, la génération de trajectoire est effectuée par itérations successives correspondant chacune à une tranche T, ces tranches T étant retirées du fichier F au fur et à mesure que les trajectoires correspondantes Traj sont déterminées.

On procède ainsi jusqu'à ce que l'aire de la surface à revêtir S modélisée dans le fichier F soit nulle, c'est-à-dire que le retrait successif des différentes tranches T corresponde à l'élimination totale de la surface S dans le fichier F. Ceci est évalué lors d'une étape 108. Tant que l'aire détectée à l'étape 108 n'est pas nulle, les étapes 102 à 106 sont mises en œuvre de façon itérative.

Au terme de cette étape 108, on dispose d'un fichier de trajectoire global TRAJ contenant un ensemble de points remarquables $P_{tcp}$ à atteindre par la buse de référence 140 de la tête d'impression 10, avec, en chaque point remarquable, un vecteur d'orientation $\overrightarrow{OT}$ de la tête d'impression à respecter, ce fichier de trajectoire comprenant des trajectoires Traj correspondant aux éventuels aller-retour à effectuer sur chaque tranche T.

Afin d'éviter tout risque d'interférence entre la tête d'impression 10 et la surface physique de l'objet O à revêtir, un décalage systématique est, de préférence, appliqué par le contrôleur 24 sur tous les points $P_{tcp}$ de chaque trajectoire Traj, par exemple un décalage de 10 mm dans un sens opposé au vecteur d'orientation $\overrightarrow{OT}$ associé au point $P_{tcp}$. En fait, le contrôleur 24 utilise les points $P_{tcp}$ pour construire un ensemble de points plus éloignés de la surface S que ces points $P_{tcp}$. Ce décalage est une mesure de sécurité, qui vise à éviter que la tête d'impression 10 ne heurte l'objet à revêtir O. La valeur de ce décalage est sélectionnée en fonction de la précision des déplacements du robot 20, de la précision de la modélisation de la surface S dans le fichier F et de la géométrie de la tête d'impression 10.

A partir des fichiers de trajectoire Traj générés aux différentes étapes 104, une simulation numérique permet de connaître, lors d'une étape 110, la position, l'orientation et l'activation éventuelle de chaque buse 14 en fonction d'un pas d'avancement paramétrable de la buse de référence 140, sur chaque trajectoire Traj.

Cette étape 110 comprend une première sous-étape 1101 de détermination de la position et de l'orientation de chaque buse 14 en fonction du pas d'avancement paramétrable.

Dans cette sous-étape 1101, le calculateur 40 segmente chaque mouvement de la buse de référence 140 en plusieurs pas élémentaires p, entre deux couples ($P_{tcp}$, $\overrightarrow{OT}$) formés chacun d'un point remarquable $P_{tcp}$ de la trajectoire Traj et du vecteur d'orientation tête $\overrightarrow{OT}$ associé. En d'autres termes, le calculateur 40 discrétise le déplacement de la tête d'impression 10, entre des points remarquables $P_{tcp}$ d'une trajectoire Traj, pour les buses 14, au moyen de positions discrétisées $P14_{l,p}$.

En considérant que le corps 12 de la tête d'impression 10 est rigide et correctement modélisé, la position de la buse de référence 140 permet de connaître la position des autres buses 14 lorsque la tête d'impression 10 se déplace le long de la trajectoire Traj.

On considère que les buses 14 sont numérotées de 1 à n X m, avec l'indice $\ell$. On note $P14_l$ un point atteint par une buse $14_\ell$ lors du déplacement de la tête d'impression 10 le long d'une trajectoire Traj, avec $\ell$ compris entre 1 et n X m.

Dans une sous-étape 1102 de l'étape 110, et en chaque point $P14_\ell$, le calculateur 40 recherche, pour la buse correspondante $14_\ell$, un point d'impact PI du jet de produit de revêtement sortant de cette buse avec la surface S, c'est-à-dire un point d'intersection entre une droite disposée selon l'axe de la buse $14_\ell$ en question et la surface à revêtir S. En d'autres termes, le calculateur 40 détermine l'existence d'un point d'impact $PI_{\ell,p}$ pour chaque buse 14 et en chaque position discrétisée $P14_{\ell,p}$ à la sous-étape 1101. Si ce point d'impact PI existe, le calculateur 40 considère que la buse doit projeter du produit de revêtement en ce point. Si ce point d'impact n'existe pas, le calculateur 40 considère que la buse ne doit pas projeter de produit de revêtement lorsqu'elle est au point $P14_\ell$.

On considère que l'on est au pas p d'avance de la tête d'impression 10 le long de la trajectoire. Dans ce cas, au cours de la sous-étape 1102 et pour chaque buse $14_\ell$, le calculateur 40 peut noter le point atteint $P14_{\ell,P}$ au pas p, son orientation $\overrightarrow{OT}_{\ell,p+1}$ en ce pas et les coordonnées du point d'impact correspondant $PI_{\ell,p}$, les indices $\ell$ et p signifiant que le point atteint et le point d'impact sont ceux de la buse $\ell$ au pas p. Le calculateur 40 passe alors au pas suivant, p+1, et recommence les mêmes opérations de calcul du point d'impact $PI_{\ell,p+1}$ pour chaque buse $14_\ell$. Si ce point d'impact existe, le calculateur 40 l'enregistre à nouveau en tant que couple formé du point $PI_{\ell,p+1}$ et du vecteur $\overrightarrow{OT}_{\ell,p+1}$ associé.

Lorsqu'il existe deux points d'impact consécutifs, $PI_{\ell,p}$ et $PI_{\ell,p+1}$ pour la buse $14_\ell$, le calculateur 40 calcule, au cours d'une sous-étape 1103 de l'étape 110, la distance $d_{\ell,P}$ entre ces deux points d'impact. Cette distance $d_{\ell,p}$ est la distance à revêtir par la buse $14_\ell$, entre les deux pas p et p+1 d'avance de la buse $\ell$ le long de la trajectoire Traj.

De la même façon, s'il existe trois points d'impact consécutifs pour la même buse $14_\ell$, le calculateur 40 calcule, au cours de la sous-étape 1103, la distance $d_{\ell,p+1}$ à revêtir au deuxième pas, à savoir la distance entre les points $PI_{\ell,p+1}$ et $PI_{\ell,p+2}$, avec les mêmes notations que précédemment.

Ainsi, au cours du déplacement de la tête d'impression 10 selon la trajectoire, il est possible de déterminer, pour chaque buse $14_\ell$ et pour une succession de pas,

- la distance $d_\ell$ à revêtir sur cette succession de pas, c'est-à-dire la distance que cette buse doit parcourir en peignant, c'est-à-dire en projetant du produit de revêtement, et
- la distance $d'_\ell$, à ne pas revêtir sur cette succession de pas, c'est-à-dire la distance que cette buse doit parcourir soit sans peindre, c'est-à-dire sans projeter un tel produit.

Comme les buses 14 sont reparties et écartées les unes des autres sur la face avant de la tête d'impression 10, c'est-à-dire la face de cette tête qui tourne vers l'objet O à revêtir, toutes les buses ne parcourent pas la même distance entre deux pas d'avance de la tête d'impression 10. Ainsi, la surface à revêtir S vue de chaque buse est différente. Pour simplifier les calculs, il est possible d'effectuer un calcul de la distance à revêtir et/ou de la distance à ne pas revêtir pour la buse de référence 140 et d'appliquer un coefficient multiplicateur de majoration ou de minoration, tenant compte de la position de chaque buse $14_\ell$ vis-à-vis de la buse de référence 140 sur les distances à revêtir ou à ne pas revêtir, ceci afin de corriger les distances à revêtir ou à ne pas revêtir en fonction de l'éloignement d'une buse $14_\ell$, par rapport à la buse de référence 140. Ceci est réalisé également pendant la sous-étape 1103.

En variante, le rapport des distances peut être immédiatement appliqué sur les distances concernées, sans utiliser de coefficient multiplicateur à la sous-étape 1103.

Que ce soit avec ou sans utiliser de coefficient multiplicateur, au cours de la sous-étape 1103, le calculateur 40 calcule une distance à revêtir $d_\ell$ ou une distance à ne pas revêtir $d'_\ell$ en chaque position discrétisée de la trajectoire et, éventuellement, des coefficients multiplicateurs en fonction de la distance entre une buse $14_\ell$ et une buse de référence 140.

Les différents calculs des distances à revêtir $d_\ell$, des distances à ne pas revêtir $d'_\ell$ et, le cas échéant, des coefficients multiplicateurs, pour chaque buse $14_\ell$ permettent de construire, au cours d'une sous-étape finale 1104 de l'étape 110, un fichier de programmation, c'est-à-dire un support de stockage d'un programme, Prog(TRAJ) d'activation des différentes buses $14_\ell$, sur la trajectoire globale TRAJ formé des différentes trajectoires Traj, notamment sur chaque trajectoire Traj définie en regard de chaque tranche T de la surface à revêtir S.

Ce fichier de programmation Prog(TRAJ) est utilisé par l'ECU 30 pour piloter chaque buse $14_\ell$ en fonction des distances à revêtir, des distances à ne pas revêtir et des coefficients multiplicateurs associés.

Lorsque le rapport des distances est immédiatement appliqué sur les distances concernées, sans utiliser de coefficient multiplicateur, comme envisagé en variante ci-dessus, le fichier de programmation Prog(TRAJ) ne comporte que les distances à revêtir et à ne pas revêtir, mais pas de coefficient multiplicateur.

En variante, il est possible, à chaque pas de discrétisation de la sous-étape 1101, de déterminer le point d'impact éventuel PI, ainsi que la distance $d_l$ ou $d'_l$ et le coefficient multiplicateur, pour chaque buse $14_\ell$.

Ainsi l'ordre des sous-étapes 1101 à 1103 mentionné ci-dessus peut être modifié en adaptant l'étape 110.

En pratique, les étapes de calcul sont effectuées par le processeur de l'ordinateur qui constitue le calculateur 40, ce processeur étant programmé à cet effet et associé à une mémoire de l'ordinateur dans laquelle le résultat de ces calculs peut être stocké, avant d'être transmis, sous la forme du fichier de programmation Prog(TRAJ) à l'ECU 30 et sous la forme de la trajectoire TRAJ au contrôleur 24.

Dans ces conditions, lorsque le programme Prog(TRAJ) a été défini lors de l'étape 110 du procédé d'invention, comme mentionné ci-dessus, il peut être mis en œuvre lors d'une étape 112 lorsque le robot 20 déplace la tête d'impression 10 en regard de la surface physique à revêtir, dont le fichier F est le modèle informatique, le long de la trajectoire TRAJ, en respectant les orientations de la buse de référence 140 en chaque point remarquable $P_{tcp}$, en fonction du programme d'activation défini à l'étape 110, ce que représente l'étape 112 à la figure 11.

En variante, le programme Prog(TRAJ) d'activation des buses 14 de la tête d'impression 10 peut être défini immédiatement après la détermination de la trajectoire en regard de chaque tranche T de la surface à revêtir S. En d'autres termes, l'étape 110 peut avoir lieu avant les étapes 106 et 108. Il est alors possible de regrouper les différents programmes d'activation des buses définis pour chaque trajectoire en regard d'une tranche T, dans un programme global d'activation des buses sur l'ensemble de la trajectoire, en regard de l'ensemble de la surface S.

L'invention est décrite ci-dessus dans le cas où les repères R0 et R1 sont orthogonaux. Ces repères peuvent, en particulier, être orthonormés ou, à l'inverse, non orthogonaux et/ou non normés. Les calculs du procédé de l'invention sont alors adaptés.

Le mode de réalisation et les variantes mentionnés ci-dessus peuvent être combinés pour générer de nouveaux modes de réalisation de l'invention tant que ces nouveaux modes de réalisation sont couverts par le texte des revendications annexées.

## Revendications

**1.** Procédé d'application de produit de revêtement sur une surface à revêtir (S) d'un objet (O), la surface à revêtir étant modélisée par un fichier (F) informatique et comprenant au moins une zone à revêtir (Z1), ce procédé étant mis en œuvre au moyen d'une tête d'impression (10) qui, d'une part, est montée sur un bras (22) de robot (20) prévu pour déplacer la tête d'impression en regard de la surface et qui, d'autre part, comprend un corps (12) équipé d'au moins une buse (14) d'impression, ce procédé comprenant au moins des étapes successives, réalisées par un calculateur (40) et consistant à :

a) définir (102), par un calcul automatique à partir du fichier informatique (F) modélisant la surface à revêtir (S), une tranche (T) de surface à revêtir ;

b) définir (104), par un calcul automatique, une trajectoire (Traj) en regard de la tranche (T) de surface à revêtir, cette trajectoire étant formée d'une succession de points remarquables ($P_{tcp}$) à atteindre par un point déterminé (140) de la tête d'impression avec, en chaque point remarquable, une orientation ($\overrightarrow{OT}$) de la tête d'impression à respecter ;

c) retirer (106), par un calcul automatique, la tranche à revêtir (T) du fichier informatique (F) modélisant la surface à revêtir (S) ;

d) recommencer à l'étape a) jusqu'à ce que la surface à revêtir modélisée soit d'aire nulle ;

e) définir (110) un programme (Prog(TRAJ)) d'activation de chaque buse (14) de la tête d'impression (10) sur chaque trajectoire (Traj); et

f) appliquer (112) le produit de revêtement en activant chaque buse de la tête d'impression sur les différentes trajectoires (Traj) définies à l'étape b) en respectant l'orientation ($\overrightarrow{OT}$) de la tête d'impression (10) en chaque point remarquable, en fonction du programme d'activation (Prog(TRAJ)) défini à l'étape e),

**caractérisé en ce que** l'étape a) comprend au moins des sous-étapes successives consistant à :

a1) définir (1021) un premier repère orthogonal (R0) ayant

- pour origine un point (O) sélectionné par un utilisateur dans une surface de support (SP) imaginaire située à proximité de la surface à revêtir (S) dans une représentation de l'espace utilisant le fichier informatique (F), , ou bien dans la surface à revêtir (S) elle-même

- pour axe des hauteurs ($\overrightarrow{Oz}$) une normale ($\overrightarrow{Nsp}$) à la surface de support (SP) ou à la surface (S) au point d'origine,

- pour axe des ordonnées ($\overrightarrow{Oy}$) le produit vectoriel de l'axe des hauteurs et un axe aligné sur une direction d'avance sélectionnée par l'utilisateur, et

- pour axe des abscisses ($\overrightarrow{Ox}$) le produit vectoriel de l'axe des ordonnées ($\overrightarrow{Oy}$) et de l'axe des hauteurs ($\overrightarrow{Oz}$)

a2) définir (1022) une première normale ($\overrightarrow{N}$) et initier sa valeur comme égale à un vecteur dont la direction est l'axe des hauteurs ($Oz$) du premier repère orthogonal (R0) défini en dernier lieu ;

a3) définir (1024), dans le premier repère orthogonal (R0), un premier point ($P_{init}$) comme un point de la surface à revêtir (S) dont l'ordonnée est la plus grande dans le premier repère orthogonal, parmi les points de la surface à revêtir ;

a4) définir (1025), dans le premier repère orthogonal (R0), un deuxième point ($P_{cut}$) comme un point de la surface à revêtir situé, par rapport au premier point, à une première distance (d2) mesurée selon l'axe des ordonnées et dans un sens négatif selon cet axe, cette première distance étant fixée en fonction de la répartition de chaque buse (14) sur la tête d'impression (10) ;

a5) calculer (1027) une normale moyenne ($\overrightarrow{N\mu}$) à une tranche temporaire (T') de la surface à revêtir définie (1026) entre un premier plan ($\pi1$) et un deuxième plan ($\pi2$) perpendiculaires à l'axe des ordonnées ($\overrightarrow{Oy}$) du premier repère orthogonal (R0) et passant respectivement par les premier et deuxième points ($P_{init}$, $P_{cut}$)

a6) comparer (1028) la première normale ($\overrightarrow{N}$) et la normale moyenne ($\overrightarrow{N\mu}$) ;

a7) si la première normale et la normale moyenne sont identifiées comme différentes à l'étape a6),

a71) redéfinir (1030) la première normale comme égale à la normale moyenne ;
a72) redéfinir (1031) le premier repère orthogonal en prenant en compte cette nouvelle première normale ;
a73) mettre en œuvre à nouveau les sous-étapes a3) à a6)

a8) si la première normale et la normale moyenne sont identifiées comme égales à l'étape a6), définir (1032) la tranche à revêtir (T) comme égale à la tranche temporaire (T') de l'étape a5).

2. Procédé selon la revendication 1, **caractérisé en ce que** l'étape b) comprend des sous-étapes successives consistant à :

bA) définir (1041-1055) par itérations une portion (P) de la tranche (T) de surface à revêtir (S) ;
bB) calculer (1056-1059) un point d'impact ($P_{impact}$) sur la portion définie à la sous-étape bA) et un axe d'orientation ($\overrightarrow{OT}$) de la tête d'impression (10) au point d'impact ;
bC) retirer (1071), par le calcul, une fraction (P) de la tranche (T) de surface à revêtir ;
bD) recommencer à l'étape bA) jusqu'à ce que la tranche de surface à revêtir soit d'aire nulle ;
bE) générer (1076) une partie de la trajectoire (Traj) correspondant à un aller de la tête d'impression le long de la tranche à revêtir (T) ; et
bF) en fonction de la largeur d'un faisceau (15) de produit de revêtement issu de la tête d'impression et d'une largeur (d2) de la tranche à revêtir, générer (1091) le cas échéant une partie (ΔTraj) de la trajectoire correspondant à un retour ou à un aller supplémentaire de la tête d'impression le long de la tranche à revêtir.

3. Procédé selon l'une des revendications précédentes dans lequel, lorsque la surface à revêtir (S) comprend au moins une zone à ne pas revêtir (Z0), le procédé comprend une étape supplémentaire, mise en œuvre entre les étapes b) et c) et consistant à :
g) adapter la trajectoire (Traj) de tête d'impression (10) en regard de la zone à ne pas revêtir (Z0), pour ne pas heurter l'objet (O).

4. Procédé selon l'une des revendications précédentes, **caractérisé en ce que** le corps (12) de la tête d'impression (10) est équipé de plusieurs buses (14) qui sont disposées en rangées (16) parallèles entre elles et **en ce que** la première distance (d2) est un multiple d'une distance (d1) entre deux rangées (16) de buses (14) adjacentes ou entre deux buses consécutives d'une même rangée, mesurée perpendiculairement à une direction d'avance (F1) de la tête d'impression.

5. Procédé selon l'une des revendications précédentes, **caractérisé en ce que** l'étape b) comprend au moins des sous-étapes successives consistant à :

b1) définir (1042) un deuxième repère orthogonal (R1) ayant pour origine le premier point ($P_{init}$), et pour axes des abscisses (Ox), des ordonnées ($\overrightarrow{Oy}$) et des hauteurs ($\overrightarrow{Oz}$) des axes confondus avec les axes du premier repère orthogonal (R0) défini en dernier lieu, à l'étape a1) ou à l'étape a72) ;
b2) définir (1045) un nouvel axe des abscisses *(nX)* comme l'axe des abscisses ($\overrightarrow{Ox}$) du deuxième repère orthogonal (R1) ;
b3) définir (1047), dans le deuxième repère orthogonal (R1), un point initial ($Q_{init}$) comme un point de la tranche (T) de surface à revêtir dont l'abscisse est la plus petite parmi les points de la tranche ;
b4) définir (1048) , dans le deuxième repère orthogonal (R1), un point de coupure ($Q_{cut}$) comme un point de la tranche (T) de surface à revêtir situé, par rapport au point initial et le long du nouvel axe des abscisses, à une distance donnée (d3) ;
b5) calculer (1050) une normale moyenne ($\overrightarrow{N'\mu}$) à une portion temporaire (P') de la tranche (T) de la surface à revêtir définie (1049) entre un troisième plan ($\pi3$) et un quatrième plan ($\pi4$) perpendiculaire au nouvel axe des abscisses *(nX)* et passant respectivement par le point initial ($Q_{init}$) et par le point de coupure ($Q_{cut}$)
b6) calculer (1051) un axe longitudinal temporaire ($\overrightarrow{Xtemp}$) égal au produit vectoriel normalisé de la normale moyenne ($\overrightarrow{N'\mu}$) calculée à l'étape b5) et de l'opposé ($-\overrightarrow{Oy}$) de l'axe des ordonnées du deuxième repère orthogonal (R1) ;
b7) comparer (1052) le nouvel axe des abscisses *(nX)* et l'axe longitudinal temporaire ($\overrightarrow{Xtemp}$) ;
b8) si le nouvel axe des abscisses et l'axe longitudinal temporaire sont identifiés comme différents à l'étape b7),

b81) redéfinir (1054) le nouvel axe des abscisses *(nX)* comme égal à l'axe longitudinal temporaire ($\overrightarrow{Xtemp}$) ;
b82) mettre en œuvre à nouveau les sous-étapes b3) à b7)

b9) si le nouvel axe des abscisses et l'axe longitudinal temporaire sont identifiés comme égaux à l'étape b7), définir (1055) une portion de tranche à revêtir (P) comme égale à la portion temporaire (P') de l'étape b5).

**6.** Procédé selon la revendication 5, **caractérisé en ce que** l'étape b) comprend au moins des sous-étapes successives suivant les sous-étapes b1) à b9) et consistant à :

b10) calculer (1056) un vecteur ($\overrightarrow{OT}$) d'orientation de la tête d'impression égal au produit vectoriel du nouvel axe des abscisses ($\overrightarrow{nX}$) et de l'opposé ($\overrightarrow{-Oy}$) de l'axe des ordonnées du deuxième repère orthogonal (R1) ;
b11) définir (1057) un point de centre ($P_{centre}$) comme un point situé

- à mi-distance entre les projections orthogonales du point initial (Qinit) et du point de coupure (Qcut) sur une droite passant par le point initial (Qinit) et de vecteur directeur égal au nouvel axe ($\overrightarrow{nX}$) et
- à une troisième distance (d4) du point initial (Qinit) mesurée selon l'axe des ordonnées ($\overrightarrow{Oy}$) du deuxième repère orthogonal (R1) et dans un sens négatif selon cet axe, cette troisième distance étant égale à la moitié de la première distance (d2) ;

b12) définir (1058) un point d'impact ($P_{impact}$) comme la projection du point de centre ($P_{centre}$) sur la portion (P) de tranche (T) de surface à revêtir selon une droite dont le vecteur directeur est le vecteur ($\overrightarrow{OT}$) d'orientation de la tête d'impression ;
b13) si le point d'impact existe, ajouter (1070) le point d'impact (Pimpact) et le vecteur ($\overrightarrow{OT}$) d'orientation de la tête d'impression dans la trajectoire (Traj).

**7.** Procédé selon la revendication 6, **caractérisé en ce que** le corps (12) de la tête d'impression (10) est équipé de plusieurs buses (14) qui sont disposées en rangées (16) parallèles entre elles, **en ce que** l'abscisse, le long du nouvel axe des abscisses *(nX)* du deuxième repère orthogonal (R1), du point de centre ($P_{centre}$) est égale à la demi-somme des abscisses des projections orthogonales du point initial ($Q_{init}$) et du point de coupure ($Q_{cut}$) sur une droite passant par le point initial et de vecteur directeur égal au nouvel axe *(nX)* et **en ce que** le point de centre ($P_{centre}$) est décalé, par rapport à cette droite et dans le sens opposé celui de l'axe des ordonnées ($\overrightarrow{Oy}$) du deuxième repère orthogonal, d'une distance (d4) mesurée selon l'axe des ordonnées et égale à la moitié (nXd1/2) du produit du nombre (n) de rangées de buses et de la distance (d1) entre deux de ces rangées.

**8.** Procédé selon l'une des revendications 6 ou 7, **caractérisé en ce que**, si le point d'impact de l'étape b12) n'existe pas, du fait de l'absence de matière de la tranche (T) de surface à revêtir le long d'une droite dont le vecteur directeur est le vecteur ($\overrightarrow{OT}$) d'orientation de la tête d'impression et qui passe par le point de centre ($P_{centre}$), des sous-étapes supplémentaires sont mises en œuvre entre les sous-étapes b12) et b13), qui consistent à :

b14) rechercher un point extrême (p8) de la portion (P) de tranche à revêtir dont la position le long d'un axe parallèle au vecteur ($\overrightarrow{OT}$) d'orientation de la tête d'impression est la plus éloignée dans un sens opposé à ce vecteur ;
b15) projeter le point extrême (p8) sur un axe passant par le point de centre ($P_{centre}$) et parallèle au vecteur ($\overrightarrow{OT}$) d'orientation de la tête d'impression pour définir un point d'impact alternatif ($P'_{impact}$) ;
b16) assimiler (1059) le point d'impact ($P_{impact}$) au point d'impact alternatif ($P'_{impact}$) pour la portion (P) de tranche à revêtir (T) en cours de traitement.

**9.** Procédé selon l'une des revendications 6 à 8, **caractérisé en ce que** l'étape b) comprend au moins des sous-étapes successives suivant les sous-étapes b1) à b13) et consistant à :

b18) réduire (1071) la tranche (T) de surface à revêtir d'une fraction de celle-ci, notamment de la portion (P) définie à l'étape b9) ;
b19) déterminer (1072) si la tranche de surface à revêtir a une aire non nulle ;
b20) si le résultat de la détermination de l'étape b19) est positif, mettre à nouveau en œuvre les sous-étapes b3) à b19).

**10.** Procédé selon l'une des revendications 6 à 9, **caractérisé en ce que** l'étape b) comprend au moins des sous-étapes successives suivant les sous-étapes b1) à b13) et consistant à :

b21) définir (1074) un vecteur ($\overrightarrow{AxeXT}$) d'axe de la tête d'impression en chaque point d'impact ($P_{impact}$) comme égal au produit vectoriel normalisé du vecteur ($\overrightarrow{OT}$) d'orientation de la tête d'impression en ce point et de l'axe des

ordonnées ($\overrightarrow{Oy}$) du deuxième repère orthogonal (R1) ;

b23) définir (1075) un point remarquable ($P_{tcp}$) à atteindre à partir du point d'impact ($P_{impact}$), de la répartition (dx, dy) de la ou des buses (14) sur la tête d'impression (10), du vecteur d'axe ($\overrightarrow{AxeXT}$) de la tête et de l'axe des ordonnées (Oy) du deuxième repère orthogonal (R1) ;

b24) inclure (1076) le point remarquable ($P_{tcp}$) et le vecteur ($\overrightarrow{OT}$) d'orientation de la tête d'impression au point d'impact correspondant (Pimpact) dans la trajectoire (Traj)

et **en ce que**, de préférence,

- l'étape b) comprend une sous-étape supplémentaire (1077) d'ajout à la trajectoire (Traj) définie pour chaque tranche (T) de la surface à revêtir d'au moins un point d'entrée ($Pe_1$,$Pe_2$) et/ou d'au moins un point de sortie ($P_{d1}$,$P_{d2}$), supplémentaire par rapport à ceux calculés à l'étape b24) et/ou

- l'étape b) comprend une sous-étape supplémentaire (1078) d'optimisation du nombre de points remarquables ($P_{tcp}$) de la trajectoire au cours de au moins un point remarquable est supprimé, à savoir un point remarquable colinéaire avec un point qui le précède et avec un point qui le suit le long de la trajectoire (Traj) et dont l'axe d'orientation ($\overrightarrow{OT}$) est parallèle à l'axe d'orientation du point qui le précède et avec l'axe d'orientation du point qui le suit le long de la trajectoire et/ou

- l'étape b) comprend une sous-étape de détermination, en fonction de la largeur ($\ell15$) d'un faisceau (15) de produit de revêtement issu de la tête d'impression (10) et d'une largeur (d2) de la tranche (T) de surface à revêtir, du nombre (ARmax) d'aller-retour de la tête d'impression à effectuer pour revêtir la tranche à revêtir (T) et **en ce que**, le cas échéant, un ou des tronçons (ΔTraj) de la trajectoire (T), suivant le premier aller, sont calculés en inversant l'ordre des points remarquables ($P_{ctp}$) définis à l'étape b23) pour le tronçon de trajectoire précédent.

11. Procédé selon l'une des revendications précédentes, **caractérisé en ce que** les sous-étapes a71) à a73) ou les sous-étapes b81) et b82) sont mises en œuvre jusqu'à ce qu'un nombre limite d'itérations (V1, V2) soit atteint.

12. Procédé selon l'une des revendications précédentes **caractérisé en ce que**, à partir de la trajectoire (Traj) définie à l'étape b), le calculateur (40) calcule, pour chaque buse (14) de la tête d'impression, une distance à revêtir ($d_l$) ou une distance à ne pas revêtir ($d'_l$) sur une succession de pas d'avance (p) de la tête d'impression (10).

13. Procédé selon l'une des revendications précédentes, **caractérisé en ce que**, l'étape e) comprend des sous étapes consistant à :

e1) discrétiser (1101) le déplacement de la tête d'impression (10), entre des points remarquables ($P_{tcp}$) d'une trajectoire (Traj), au moyen de positions discrétisées ($P14_{l,p}$);

e2) déterminer (1102) l'existence d'un point d'impact ($PI_{\ell,p}$) pour chaque buse (14) en chaque position discrétisée ($P14_{\ell,p}$) à la sous-étape e1) ;

e3) calculer (1103) une distance à revêtir ($d_\ell$) ou une distance à ne pas revêtir ($d'_\ell$) en chaque position discrétisée de la trajectoire et, éventuellement, des coefficients multiplicateurs, en fonction de la distance entre une buse (14) et une buse de référence (140); et

e4) construire (1104) un fichier de programmation (Prog(TRAJ)) pour l'activation de chaque buse le long des trajectoires.

14. Installation d'application de produit de revêtement liquide sur une surface à revêtir (S) d'un objet (O), l'installation incluant une tête d'impression (10) qui, d'une part, est montée sur un bras (22) de robot (20) prévu pour déplacer la tête d'impression en regard de la surface et qui, d'autre part, comprend un corps (12) équipé d'au moins une buse (14) d'impression, cette installation étant **caractérisée en ce qu'**elle comprend un calculateur (40) configuré pour mettre en œuvre les étapes d'un procédé selon l'une des revendications précédentes, réalisées par le calculateur.

**Patentansprüche**

1. Verfahren zum Aufbringen von Beschichtungsprodukt auf eine zu beschichtende Oberfläche (S) eines Objekts (O), wobei die zu beschichtende Oberfläche durch eine Computerdatei (F) modelliert wird und mindestens einen zu beschichtenden Bereich (Z1) umfasst, wobei dieses Verfahren mittels eines Druckkopfs (10) durchgeführt wird, der einerseits, auf einem Arm (22) eines Roboters (20) montiert ist, der bereitgestellt ist, um den Druckkopf gegenüber der Oberfläche zu bewegen, und der andererseits einen Körper (12) umfasst, der mit mindestens einer Druckdüse (14) ausgestattet ist, dieses Verfahren umfassend mindestens aufeinanderfolgende Schritte, die von einem Rechner (40) ausgeführt werden und aus Folgendem bestehen:

a) Definieren (102), durch eine automatische Berechnung anhand der Computerdatei (F), die die zu beschichtende Oberfläche (S) modelliert, eines Teilabschnitts (T) der zu beschichtenden Oberfläche;

b) Definieren (104), durch eine automatische Berechnung, einer Bahn (Traj) gegenüber dem Teilabschnitt (T) der zu beschichtenden Oberfläche, wobei diese Bahn aus einer Abfolge von markanten Punkten ($P_{tcp}$) gebildet wird, die von einem bestimmten Punkt (140) des Druckkopfs erreicht werden müssen, wobei an jedem markanten Punkt eine Ausrichtung ($\overrightarrow{OT}$) des Druckkopfs einzuhalten ist;

c) Entfernen (106), durch eine automatische Berechnung, des zu beschichtenden Teilabschnitts (T) aus der Computerdatei (F), die die zu beschichtende Oberfläche (S) modelliert;

d) erneutes Beginnen bei Schritt a), bis die modellierte zu beschichtende Oberfläche eine Oberfläche von Null ist;

e) Definieren (110) eines Programms (Prog(TRAJ)) zum Aktivieren jeder Düse (14) des Druckkopfs (10) auf jeder Bahn (Traj); und

f) Aufbringen (112) des Beschichtungsprodukts durch Aktivieren jeder Düse des Druckkopfs auf den verschiedenen in Schritt b) definierten Bahnen (Traj) unter Einhaltung der Ausrichtung ($\overrightarrow{OT}$) des Druckkopfs (10) an jedem markanten Punkt abhängig von dem in Schritt e) definierten Aktivierungsprogramm (Prog(TRAJ)),

**dadurch gekennzeichnet, dass** Schritt a) mindestens aufeinanderfolgende Teilschritte umfasst, die aus Folgendem bestehen:

a1) Definieren (1021) eines ersten orthogonalen Koordinatensystems (R0), das Folgendes aufweist

- als Ursprung einen Punkt (O), der von einem Benutzer in einer imaginären Auflagefläche (SP) ausgewählt wird, die sich in einer Darstellung des Raums unter Verwendung der Computerdatei (F) in der Nähe der zu beschichtenden Oberfläche (S) befindet, oder in der zu beschichtenden Oberfläche (S) an sich
- für die Höhenachse ($\overrightarrow{Oz}$) eine Senkrechte ($\overrightarrow{Nsp}$) zu der Auflagefläche (SP) oder zu der Oberfläche (S) in dem Ursprungspunkt,
- für die Ordinatenachse ($\overrightarrow{Oy}$) das Vektorprodukt der Höhenachse und einer Achse, die auf eine vom Benutzer gewählte Vorschubrichtung ausgerichtet ist, und
- für die Abszissenachse ($\overrightarrow{Ox}$) das Vektorprodukt der Ordinatenachse ($\overrightarrow{Oy}$) und der Höhenachse ($\overrightarrow{Oz}$)

a2) Definieren (1022) einer ersten Senkrechten ($\overrightarrow{N}$) und Initiieren ihres Werts als gleich wie ein Vektor, dessen Richtung die Höhenachse ($\overrightarrow{Oz}$) des zuletzt definierten ersten orthogonalen Koordinatensystems (R0) ist;

a3) Definieren (1024) in dem ersten orthogonalen Koordinatensystem (R0) eines ersten Punkts ($P_{init}$) als einen Punkt auf der zu beschichtenden Oberfläche (S), dessen Ordinate in dem ersten orthogonalen Koordinatensystem von den Punkten auf der zu beschichtenden Oberfläche am größten ist;

a4) Definieren (1025) in dem ersten orthogonalen Koordinatensystem (R0) eines zweiten Punkts ($P_{cut}$) als einen Punkt der zu beschichtenden Oberfläche, der sich in Bezug auf den ersten Punkt in einem ersten Abstand (d2) befindet, der entlang der Ordinatenachse und in einer negativen Richtung entlang dieser Achse gemessen wird, wobei dieser erste Abstand abhängig von der Verteilung von jeder Düse (14) auf dem Druckkopf (10) festgelegt wird;

a5) Berechnen (1027) einer durchschnittlichen Senkrechten ($\overrightarrow{N\mu}$) zu einem temporären Teilabschnitt (T') der zu beschichtenden Oberfläche (1026), der zwischen einer ersten Ebene ($\pi1$) und einer zweiten Ebene ($\pi2$) senkrecht zu der Ordinatenachse ($\overrightarrow{Oy}$) des ersten orthogonalen Koordinatensystems (R0) definiert ist und durch den ersten bzw. zweiten Punkt ($P_{init}$, $P_{cut}$) verläuft

a6) Vergleichen (1028) der ersten Senkrechten ($\overrightarrow{N}$) und der durchschnittlichen Senkrechte ($\overrightarrow{N\mu}$);

a7) wenn die erste Senkrechte und die durchschnittliche Senkrechte in Schritt a6) als unterschiedlich identifiziert werden,

a71) Neudefinieren (1030) der ersten Senkrechten als gleich wie die durchschnittliche Senkrechte;

a72) Neudefinieren (1031) des ersten orthogonalen Koordinatensystems unter Berücksichtigung dieser neuen ersten Senkrechten;

a73) erneutes Durchführen der Teilschritte a3) bis a6)

a8) wenn die erste Senkrechte und die durchschnittliche Senkrechte in Schritt a6) als gleich identifiziert werden, Definieren (1032) des zu beschichtenden Teilabschnitts (T) als gleich wie der temporäre Teilabschnitt (T') von Schritt a5).

**2.** Verfahren nach Anspruch 1, **dadurch gekennzeichnet, dass** Schritt b) aufeinanderfolgende Teilschritte umfasst, die aus Folgendem bestehen:

bA) iteratives Definieren (1041 -1055) eines Abschnitts (P) des Teilabschnitts (T) der zu beschichtenden Oberfläche (S);

bB) Berechnen (1056-1059) eines Auftreffpunkts ($P_{impact}$) auf dem Abschnitt, der in dem Teilschritt bA) definiert ist und einer Ausrichtungsachse ($\overrightarrow{OT}$) des Druckkopfs (10) an dem Auftreffpunkt;

bC) Entfernen (1071), durch Berechnung, einer Fraktion (P) der zu beschichtenden Oberfläche (T);

bD) erneutes Beginnen bei Schritt bA), bis der Teilabschnitt der zu beschichtenden Oberfläche eine Fläche von null ist;

bE) Erzeugen (1076) eines Teil der Bahn (Traj), die einem Hinweg des Druckkopfs entlang des zu beschichtenden Teilabschnitts (T) entspricht; und

bF) abhängig von der Breite eines Strahls (15) von Beschichtungsprodukts aus dem Druckkopf und einer Breite (d2) des zu beschichtenden Teilabschnitts, optional Erzeugen (1091) eines Teils (ΔTraj) der Bahn, der einem zusätzlichen Rück- oder Vorlauf des Druckkopfs entlang des zu beschichtenden Teilabschnitts entspricht.

**3.** Verfahren nach einem der vorherigen Ansprüche, wobei, wenn die zu beschichtende Oberfläche (S) mindestens einen nicht zu beschichtenden Bereich (Z0) umfasst, das Verfahren einen zusätzlichen Schritt umfasst, der zwischen den Schritten b) und c) durchgeführt wird und aus Folgendem besteht:

g) Anpassen der Bahn (Traj) des Druckkopfs (10) gegenüber dem nicht zu beschichtenden Bereich (Z0), um nicht auf das Objekt (O) zu stoßen.

**4.** Verfahren nach einem der vorherigen Ansprüche, **dadurch gekennzeichnet, dass** der Körper (12) des Druckkopfs (10) mit mehreren Düsen (14) ausgestattet ist, die in zueinander parallelen Reihen (16) angeordnet sind, und dass der erste Abstand (d2) ein Vielfaches eines Abstands (d1) zwischen zwei benachbarten Reihen (16) von Düsen (14) oder zwischen zwei aufeinanderfolgenden Düsen einer gleichen Reihe ist, gemessen senkrecht zu einer Vorschubrichtung (F1) des Druckkopfs.

**5.** Verfahren nach einem der vorherigen Ansprüche, **dadurch gekennzeichnet, dass** Schritt b) mindestens aufeinanderfolgende Teilschritte umfasst, die aus Folgendem bestehen:

b1) Definieren (1042) eines zweiten orthogonalen Koordinatensystems (R1), das als Ursprung den ersten Punkt ($P_{init}$) und als Abszissen- ($\overrightarrow{Ox}$), Ordinaten- ($\overrightarrow{Oy}$) und Höhenachse ($\overrightarrow{Oz}$) der Achsen aufweisen, die mit den Achsen des ersten orthogonalen Koordinatensystems (R0) zusammenfallen, das zuletzt in Schritt a1) oder in Schritt a72) definiert wurde;

b2) Definieren (1045) einer neuen Abszissenachse ($\overrightarrow{nX}$) als Abszissenachse (Ox) des zweiten orthogonalen Koordinatensystems (R1);

b3) Definieren (1047), in dem zweiten orthogonalen Koordinatensystem (R1), eines Anfangspunkts ($Q_{init}$) als einen Punkt des Teilabschnitts (T) der zu beschichtenden Oberfläche, dessen Abszisse die kleinste von den Punkten des Teilabschnitts ist;

b4) Definieren (1048), in dem zweiten orthogonalen Koordinatensystem (R1), eines Schnittpunkts ($Q_{cut}$) als einen Punkt des Teilabschnitts (T) der zu beschichtenden Oberfläche, der sich in Bezug auf den Anfangspunkt und entlang der neuen Abszissenachse in einem gegebenen Abstand (d3) befindet;

b5) Berechnen (1050) einer durchschnittlichen Senkrechten ($\overrightarrow{N'\mu}$) zu einem temporären Abschnitt (P') des Teilabschnitts (T) der zu beschichtenden Oberfläche, der zwischen einer dritten Ebene ($\pi3$) und einer vierten Ebene ($\pi4$) senkrecht zu der neuen Abszissenachse ($\overrightarrow{nX}$) definiert (1049) ist und durch den Anfangspunkt ($Q_{init}$) bzw. den Schnittpunkt ($Q_{cut}$) verläuft

b6) Berechnen (1051) einer temporären Längsachse ($\overrightarrow{Xtemp}$) gleich wie das normalisierte Vektorprodukt der durchschnittlichen Senkrechten ($\overrightarrow{N'\pi}$), die in Schritt b5) berechnet wird, und dem Gegenteil ($\overrightarrow{-Oy}$) der Ordinatenachse des zweiten orthogonalen Koordinatensystems (R1);

b7) Vergleichen (1052) der neuen Abszissenachse *(nX)* und der temporären Längsachse ($\overrightarrow{Xtemp}$);

b8) wenn die neue Abszissenachse und die temporäre Längsachse in Schritt b7) als unterschiedlich identifiziert werden,

b81) Neudefinieren (1054) der neuen Abszissenachse ($\overrightarrow{nX}$) als gleich wie die temporäre Längsachse ($\overrightarrow{Xtemp}$);

b82) erneutes Durchführen der Teilschritte b3) bis b7)

b9) wenn die neue Abszissenachse und die temporäre Längsachse in Schritt b7) als gleich identifiziert werden, Definieren (1055) eines zu beschichtenden Teilabschnitt (P) als gleich wie der temporäre Abschnitt (P') von Schritt b5).

6. Verfahren nach Anspruch 5, **dadurch gekennzeichnet, dass** Schritt b) mindestens aufeinanderfolgende Teilschritte umfasst, die auf die Teilschritte b1) bis b9) folgen und aus Folgendem bestehen:

   b10) Berechnen (1056) eines Vektors ($\overrightarrow{OT}$) der Ausrichtung des Druckkopfs, gleich wie das Vektorprodukt der neuen Abszissenachse *(nX)* und dem Gegenteil ($-\overrightarrow{Oy}$) der Ordinatenachse des zweiten orthogonalen Koordinatensystems (R1);
   b11) Definieren (1057) eines Mittelpunkts ($P_{centre}$) als einen Punkt, der sich

   - in der Mitte zwischen den orthogonalen Projektionen des Anfangspunkts (Qinit) und des Abschneidepunktes (Qcut) auf einer Geraden befindet, die durch den Anfangspunkt (Qinit) verläuft und mit einem Richtungsvektor gleich wie die neue Achse ($\overrightarrow{nX}$) und
   - in einem dritten Abstand (d4) von dem Anfangspunkt (Qinit), gemessen entlang der Ordinatenachse ($\overrightarrow{Oy}$) des zweiten orthogonalen Koordinatensystems (R1) und in einem negativen Sinn entlang dieser Achse, wobei dieser dritte Abstand gleich wie die Hälfte des ersten Abstands (d2) ist;

   b12) Definieren (1058) eines Auftreffpunkts ($P_{impact}$) als die Projektion des Mittelpunkts ($P_{centre}$) auf den Abschnitt (P) des Teilabschnitts (T) der zu beschichtenden Oberfläche entlang einer Geraden, deren Leitvektor der Vektor ($\overrightarrow{OT}$) der Ausrichtung des Druckkopfs ist;
   b13) wenn der Auftreffpunkt vorhanden ist, Hinzufügen (1070) des Auftreffpunkts (Pimpact) und des Vektors ($\overrightarrow{OT}$) der Ausrichtung des Druckkopfs in der Bahn (Traj).

7. Verfahren nach Anspruch 6, **dadurch gekennzeichnet, dass** der Körper (12) des Druckkopfs (10) mit mehreren Düsen (14) ausgestattet ist, die in zueinander parallelen Reihen (16) angeordnet sind, dass die Abszisse entlang der neuen Abszissenachse *(nX)* des zweiten orthogonalen Koordinatensystems (R1), des Mittelpunkts ($P_{centre}$) gleich wie die halbe Summe der Abszissen der orthogonalen Projektionen des Anfangspunkts ($Q_{init}$) und des Schnittpunkts ($Q_{cut}$) auf eine Gerade ist, die durch den Anfangspunkt verläuft und mit einem Richtungsvektor gleich wie die neue Achse *(nX),* und dass der Mittelpunkt ($P_{centre}$) in Bezug auf diese Gerade und in entgegengesetzter Richtung zu der der Ordinatenachse ($\overrightarrow{Oy}$) des zweiten orthogonalen Koordinatensystems um einen Abstand (d4), gemessen entlang der Ordinatenachse und gleich wie die Hälfte (nXd1/2) des Produkts aus der Anzahl (n) der Reihen von Düsen und dem Abstand (d1) zwischen zwei dieser Reihen ist.

8. Verfahren nach einem der Ansprüche 6 oder 7, **dadurch gekennzeichnet, dass**, wenn der Auftreffpunkt von Schritt b12) aufgrund der Abwesenheit von Material des Teilabschnitts (T) der zu beschichtenden Oberfläche entlang einer Geraden nicht vorhanden ist, deren Leitvektor der Vektor ($\overrightarrow{OT}$) der Ausrichtung des Druckkopfs ist und durch den **Mittelpunkt** ($P_{centre}$) verläuft, werden zwischen den Teilschritten b12) und b13) zusätzliche Teilschritte durchgeführt, die aus Folgendem bestehen:

   b14) Suchen eines Endpunkts (p8) des Abschnitts (P) des zu beschichtenden Teilabschnitts, dessen Position entlang einer Achse parallel zu dem Vektor ($\overrightarrow{OT}$) der Ausrichtung des Druckkopfs am weitesten in einer Richtung entgegengesetzt zu diesem Vektor entfernt ist;
   b15) Projizieren des Endpunkts (p8) auf eine Achse, die durch den Mittelpunkt ($P_{centre}$) und parallel zu dem Vektor ($\overrightarrow{OT}$) der Ausrichtung des Druckkopfs verläuft, um einen alternativen Auftreffpunkt ($P'_{impact}$) zu definieren;
   b16) Angleichen (1059) des Auftreffpunkts ($P_{impact}$) an den alternativen Auftreffpunkt ($P'_{impact}$) für den Abschnitt (P) des zu beschichtenden Teilabschnitts (T), der gerade bearbeitet wird.

9. Verfahren nach einem der Ansprüche 6 bis 8, **dadurch gekennzeichnet, dass** Schritt b) mindestens aufeinanderfolgende Teilschritte umfasst, die auf die Teilschritte b1) bis b13) folgen und aus Folgendem bestehen;

   b18) Reduzieren (1071) des zu beschichtenden Teilabschnitts (T) um eine Fraktion davon, insbesondere um den in Schritt b9) definierten Abschnitt (P);
   b19) Bestimmen (1072), ob der zu beschichtende Flächenabschnitt eine Fläche ungleich Null aufweist;
   b20) wenn das Resultat der Bestimmung in Schritt b19) positiv ist, erneutes Durchführen der Teilschritte b3) bis b19).

10. Verfahren nach einem der Ansprüche 6 bis 9, **dadurch gekennzeichnet, dass** Schritt b) mindestens aufeinanderfolgende Teilschritte umfasst, die auf die Teilschritte b1) bis b13) folgen und aus Folgendem bestehen:

b21) Definieren (1074) eines Vektors der Achse des Druckkopfs an jedem Auftreffpunkt ($P_{impact}$) als gleich wie das normalisierte Vektorprodukt des Vektors ($\overrightarrow{OT}$) der Ausrichtung des Druckkopfs an diesem Punkt und der Ordinatenachse ($\overrightarrow{Oy}$) des zweiten orthogonalen Koordinatensystems (R1);

b23) Definieren (1075) eines markanten Punkts ($P_{tcp}$), der ab dem Auftreffpunkt ($P_{impact}$), der Verteilung (dx, dy) der Düse(n) (14) auf dem Druckkopf (10), des Achsenvektors des Kopfs und der Ordinatenachse (Oy) des zweiten orthogonalen Koordinatensystems (R1) einzuhalten ist;

b24) Einbinden (1076) des markanten Punkts ($P_{tcp}$) und des Vektors ($\overrightarrow{OT}$) der Ausrichtung des Druckkopfs an dem entsprechenden Auftreffpunkt (Pimpact) in die Bahn (Traj)

und dadurch, dass vorzugsweise

- Schritt b) einen weiteren Teilschritt (1077) eines Hinzufügens mindestens eines Eintrittspunkts ($P_{e1}$, $P_{e2}$) und/oder mindestens ein Austrittspunkt ($P_{d1}$, $P_{d2}$) zusätzlich zu den in Schritt b24) berechneten, zu der Bahn (Traj), die für jeden Teilabschnitt (T) der zu beschichtenden Oberfläche definiert ist, umfasst, und/oder
- Schritt b) einen zusätzlichen Teilschritt (1078) zum Optimieren der Anzahl von markanten Punkten ($P_{tcp}$) auf der Bahn umfasst, wobei mindestens ein markanter Punkt entfernt wird, nämlich ein markanter Punkt, der mit einem vorausgehenden Punkt und einem nachfolgenden Punkt entlang der Bahn (Traj) kollinear ist und dessen Ausrichtungsachse ($\overrightarrow{OT}$) parallel zu der Ausrichtungsachse des ihm vorausgehenden Punkts und zu der Ausrichtungsachse des ihm entlang der Bahn folgenden Punkts ist, und/oder
- Schritt b) einen Teilschritt eines Bestimmens abhängig von der Breite ($\ell15$) eines Strahls (15) des Beschichtungsprodukts, der von dem Druckkopf (10) ausgeht, und einer Breite (d2) des zu beschichtenden Teilabschnitts (T) der zu beschichtenden Oberfläche der Anzahl (ARmax) der Hin- und Rückwege des Druckkopfs, die zum Beschichten des zu beschichtenden Teilabschnitts (T) durchzuführen sind, und dass optional ein oder mehrere Abschnitte ($\Delta$Traj) der Bahn (T), die dem ersten Hinweg folgen, durch Umkehren der Reihenfolge der markanten Punkte ($P_{ctp}$), die im Schritt b23) für den vorherigen Abschnitt der Bahn definiert werden, berechnet werden.

11. Verfahren nach einem der vorherigen Ansprüche, **dadurch gekennzeichnet, dass** die Teilschritte a71) bis a73) oder die Teilschritte b81) und b82) so lange durchgeführt werden, bis eine Grenzanzahl von Iterationen (V1, V2) erreicht ist.

12. Verfahren nach einem der vorherigen Ansprüche, **dadurch gekennzeichnet, dass** der Rechner (40) anhand der in Schritt b) definierten Bahn (Traj) für jede Düse (14) des Druckkopfs eine zu beschichtende Strecke ($d_l$) oder eine nicht zu beschichtende Strecke ($d'_l$) über eine Abfolge von Vorschubschritten (p) des Druckkopfs (10) berechnet.

13. Verfahren nach einem der vorherigen Ansprüche, **dadurch gekennzeichnet, dass** Schritt e) folgende Teilschritte umfasst:

e1) Diskretisieren (1101) der Bewegung des Druckkopfs (10) zwischen markanten Punkten ($P_{tcp}$) einer Bahn (Traj) mittels diskretisierter Positionen ($P14_{l,P}$);

e2) Bestimmen (1102) des Vorhandenseins eines Auftreffpunkts ($Pl_{\ell,p}$) für jede Düse (14) an jeder diskretisierten Position ($P14_{\ell,p}$) in Teilschritt e1);

e3) Berechnen (1103) eines zu beschichtenden Abstands ($d_\ell$) oder eines nicht zu beschichtenden Abstands ($d'_\ell$) an jeder diskretisierten Position der Bahn und optional von Multiplikationskoeffizienten abhängig von dem Abstand zwischen einer Düse (14) und einer Referenzdüse (140); und

e4) Erstellen (1104) einer Programmierungsdatei (Prog(TRAJ)) für die Aktivierung jeder Düse entlang der Bahnen.

14. Anlage zum Aufbringen von flüssigem Beschichtungsprodukt auf eine zu beschichtende Oberfläche (S) eines Objekts (O), wobei die Anlage einen Druckkopf (10) beinhaltet, der einerseits auf einem Arm (22) eines Roboters (20) montiert ist, der bereitgestellt ist, um den Druckkopf gegenüber der Oberfläche zu bewegen, und der andererseits einen Körper (12) umfasst, der mit mindestens einer Druckdüse (14) ausgestattet ist, wobei diese Anlage **dadurch gekennzeichnet ist, dass** sie einen Rechner (40) umfasst, der konfiguriert ist, um die Schritte eines Verfahrens nach einem der vorherigen Ansprüche, die von dem Rechner durchgeführt werden, zu implementieren.

**Claims**

1. Method for applying a coating product to a surface (S) to be coated of an object (O), the surface to be coated being modelled by a computer file (F) and comprising at least one zone to be coated (Z1), this method being implemented by means of a print head (10) which, on the one hand, is mounted on a robot (20) arm (22) provided for moving the print head in relation to the surface and which, on the other hand, comprises a body (12) equipped with at least one printing nozzle (14), this method comprising at least successive steps, carried out by a computer (40) and consisting of:

   a) defining (102) a strip (T) of surface to be coated via an automatic calculation from the computer file (F) containing the model of the surface to be coated (S),;
   b) defining (104), via an automatic calculation, a trajectory (Traj) opposite the surface strip (T) to be coated, this trajectory being formed by a succession of remarkable points ($P_{tcp}$) to be reached by a determined point (140) of the print head with, at each remarkable point, an orientation ($\overrightarrow{OT}$) of the print head to be respected;
   c) removing (106), via an automatic calculation, the strip to be coated (T) from the computer file (F) modelling the surface to be coated (S);
   d) repeating step a) until the modelled surface to be coated is of zero area;
   e) defining (110) a program (Prog(TRAJ)) for activating each nozzle (14) of the print head (10) on each path (Traj); and
   f) applying (112) the coating product by activating each nozzle of the print head on the different trajectories (Traj) defined in step b) while respecting the orientation ($\overrightarrow{OT}$) of the print head (10) at each remarkable point, according to the activation program (Prog(TRAJ)) defined in step e)

   **characterised in that** step a) comprises at least successive sub-steps that consist of:

   a1) defining (1021) a first orthogonal coordinate system (R0) having

      - as a point of origin, a point (O) chosen by a user in an imaginary support surface (SP) located near the area to be coated (SP) in a representation of the space using the computer file (F) or in the surface to be coated (S) itself
      - as height-axis ($\overrightarrow{Oz}$) a normal perpendicular ($\overrightarrow{Nsp}$) to the support surface (SP) or the surface (S) at the point of origin,
      - as ordinate-axis ($\overrightarrow{Oy}$) the vector product of the height-axis and an axis aligned on a direction of advance selected by the user, and
      - as abscissa-axis ($\overrightarrow{Ox}$) the vector product of the ordinate-axis ($\overrightarrow{Oy}$) and the height-axis ($\overrightarrow{Oz}$)

   a2) defining (1022) a first normal ($\overrightarrow{N}$) and taking as its initial value as equal to a vector whose direction is the height-axis ($\overrightarrow{Oz}$) of the most recently-defined first orthogonal coordinate system (R0) ;
   a3) defining (1024) in the first orthogonal coordinate system (R0) a first point ($P_{init}$) as a point on the surface to be coated (S) whose ordinate is the largest within the first orthogonal coordinate system, among the points of the surface to be coated;
   a4) defining (1025), within the first orthogonal coordinate system (R0), a second point ($P_{cut}$) as a point on the surface to be coated located, with respect to the first point, at a first distance (d2) measured on the ordinate-axis and in repartition of each nozzle (14) on the print head. (10);
   a5) calculating (1027) an average normal vector ($\overrightarrow{N\mu}$) of a temporary strip (T') of the d surface to be coated defined (1026) between a first plane ($\pi$1) and a second plane ($\pi$2) perpendicular to the ordinate-axis ($\overrightarrow{Oy}$) of the first orthogonal coordinate system (R0) and passing through the first and second points ($P_{init}$, $P_{cut}$) respectively.
   a6) comparing (1028) the first normal vector ($\overrightarrow{N}$) and the average normal vector ($\overrightarrow{N\mu}$);
   a7) if the first normal vector and the average normal vector are identified as being different in step a6),

      a71) redefining (1030) the first normal vector as being equal to the average normal vector;
      a72) redefining (1031) the first orthogonal coordinate system taking into account the new first normal vector;
      a73) implementing sub-steps a3) to a6) again

      a8) if the initial normal vector and the average normal vector are identified as equal in step a6), defining (1032) the portion to be coated (T) as equal to the temporary strip (T') in step a5).

2. Method according to claim 1, **characterised in that** step b) comprises successive sub-steps that consist of:

bA) defining (1041-1055) by iterations a portion (P) of the strip (T) of the surface area (T) to be coated (S):

bB) calculating (1056-1059) a point of impact ($P_{impact}$) on the portion defined in substep bA) and an axis of orientation ($\overrightarrow{OT}$) (10) at the point of impact:

bA) removing (1041-1071), by computation, a portion (P) of the strip (T) of the surface area to be coated (S),

bD) restarting at step bA) until there is no more portion to be coated;

bE) generating (1076) a part of the trajectory (Traj) that corresponds to a forward movement of the print head the length of the portion to be coated (T); and

bF) based on the size of the beam (15) of the coverage product coming from the print head and the size (d2) of the portion to be recoated, generating (1091) if necessary a part (ΔTraj) of the trajectory corresponding to an additional return or forward movement of the print head along the portion to be coated.

3. Method according to one of the previous claims in which, when the surface to be coated (S) includes at least one area not to be coated (Z0), the procedure includes an additional step, implemented between steps b) and c) and consisting of:

g) adapting the trajectory (Traj) of the print head (10) based on the zone not to be coated (Z0) in order to not hit the object (O).

4. Method according to one of the preceding claims, **characterised in that** the body (12) of the print head (10) is equipped with several nozzles (14) that are arranged in parallel rows (16) and the first distance (d2) is a multiple of a distance (d1) between two adjacent rows (16) of nozzles or between two consecutive nozzles in the same row, measured perpendicular to the print head's forward movement direction (F1).

5. Method according to one of the preceding claims, **characterised in that** step b) comprises at least successive sub-steps that consist of:

b1) defining (1042) a second orthogonal coordinate system (R1) whose point of origin is the first point ($P_{init}$), and whose abscissa-axis ($\overrightarrow{Ox}$), ordinate-axis ($\overrightarrow{Oy}$) and height-axis ($\overrightarrow{Oz}$), are superimposed with the axes of the most recently-defined first orthogonal coordinate system (R0), in step a1 or step a72;

b2) defining (1045) a new abscissa-axis ($\overrightarrow{nX}$) as the abscissa-axis ($\overrightarrow{Ox}$) of the second orthogonal coordinate system (R1);

b3) defining (1047), in the second orthogonal coordinate system (R1), an initial point ($Q_{init}$) as a point on the strip of the surface to be coated, whose abscissa is the smallest among the points of the strip;

b4) defining (1048), in the second orthogonal coordinate system (R1), a cut point ($Q_{cut}$) as a point on the strip (T) of surface to be coated, situated, in relation to the initial point and along the new abscissa-axis, at a given distance (d3);

b5) calculating (1050) an average normal vector ($\overrightarrow{N'μ}$) for a temporary portion (P') of the defined strip (T) of surface to be coated defined (1049) between a third plan (π3) and a fourth plan (π4) perpendicular to the new abscissa-axis *(nX)* and passing through the initial point ($Q_{init}$) and the cut point ($Q_{cut}$) respectively

b6) calculating (1051) a temporary longitudinal axis ($\overrightarrow{Xtemp}$) equal to the normalised vector product of the average normal vector ($\overrightarrow{N'μ}$) calculated in step b5) and of the opposite ($\overrightarrow{-Oy}$) of the ordinateY-axis of the second orthogonal coordination system (R1);

b7) comparing (1052) the new abcissa-axis *(nX)* and the temporary longitudinal axis ($\overrightarrow{Xtemp}$);

b8) if the new abscissa-axis and the temporary longitudinal axis are identified as being different in step b7),

b81) redefining (1054) the new abscissa-axis *(nX)* as being equal to the temporary longitudinal axis ($\overrightarrow{Xtemp}$);

b82) implementing sub-steps b3) to b7) again

b9) if the new X-axis and the temporary longitudinal axes are identified as being equal in step b7), defining (1055) a portion of the strip to be coated (P) as equal to the temporary portion (P') in step b5).

6. Method according to claim 5, **characterised in that** step b) is comprises at least successive sub-steps that follow sub-steps b1) to b9) and consist of:

b10) calculating (1056) a print head orientation vector ($\overrightarrow{OT}$) equal to the vector product of the new abscissa-axis ($\overrightarrow{nX}$) and of the opposite ($\overrightarrow{-Oy}$) of the ordinate-axis of the second orthogonal coordination system (R1);

b11) defining (1057) a centre point ($P_{centre}$) as a point located

- midway between the orthogonal projections of the initial point (Qinit) and the cut point (Qcut) on a straight line passing through the initial point (Qinit) and having a direction vector equal to the new axis ($\overrightarrow{nX}$) and
- at a third distance (d4) from the initial point (Qinit) measured according to the ordinate-axis ($\overrightarrow{Oy}$) of the second orthogonal coordination system (R1) and in a negative direction along this axis, this third distance (d4) being half the first distance (d2);

b12) defining (1058) a point of impact ($P_{impact}$) as the projection of the centre point ($P_{centre}$) on the portion (P) of the strip (T) of surface to be coated along a straight line whose direction vector is the print head's orientation vector ($\overrightarrow{OT}$);
b13) if the point of impact exists, adding (1070) the point of impact (Pimpact) and the print head orientation vector ($\overrightarrow{OT}$) to the trajectory (Traj).

7. Method according to claim 6, **characterised by** that the body (12) of the print head (10) is equipped with several nozzles (14) that are arranged in parallel rows (16), in that the abscissa, along the new abscissa-axis (nX) of the second orthogonal coordinate system (R1), of the centre point ($P_{centre}$) is equal to half the total of the abscissa of the orthogonal projections of the initial point ($Q_{init}$) and the cut point ($Q_{cut}$) on a straight line passing through the initial point and having a direction vector equal to the new axis ($\overrightarrow{nX}$) and in that the centre point ($P_{centre}$) is shifted in relation to this straight line and in the opposite direction to the ordinate-axis ($\overrightarrow{Oy}$) of the second orthogonal coordinate system, by a distance (d4) measured along the ordinate-axis and equal to half (nXd1/2) the product of the number (n) of rows of nozzles and the distance (d1) between two of these rows.

8. Method according to one of the claims 6 or 7 8, **characterised in that** if the point of impact in step b12) does not exist, owing to the absence of material in the strip (T) of the surface to be coated along a straight line whose direction vector is the print head orientation vector ($\overrightarrow{OT}$) and that passes through the centre point ($P_{centre}$), additional sub-steps are implemented between sub-steps b12) and b13), which consist of:

b14) looking for an extreme point (p8) of the portion (P) of the strip to be coated whose position along an axis parallel to the print head orientation vector ($\overrightarrow{OT}$) is the longest in the opposite direction to this vector;
b15) projecting the extreme point (p8) on an axis passing through the centre point ($P_{centre}$) and parallel to the print head orientation vector ($\overrightarrow{OT}$) to define an alternative point of impact ($P'_{impact}$);
b16) assimilating (1059) the point of impact ($P_{impact}$) with the alternative point of impact ($P'_{impact}$) for the portion (P) of the strip to be coated (T) in progress.

9. Method according to one of claims 6 to 8, **characterised by** that step b) comprises at least successive sub-steps that follow sub-steps b1) to b13) and that consist of:

b18) reducing (1071) the strip (T) of the surface to be coated by a fraction of itself, in particular the portion (P) defined in step b9);
b19) determining (1072) if the strip of surface to be coated has a non-null area;
b20) if the result of step b1) determination is positive, implementing the sub-steps b3) to b19) again.

10. Method according to one of claims 6 to 9, **characterised by** that step b) comprises at least successive sub-steps that follow sub-steps b1) to b13) and that consist of:

b21) defining (1074) a print head axis vector ($\overrightarrow{AxeXT}$) at each point of impact ($P_{impact}$) as equal to the normalised vector product of the print head orientation vector *(OT)* at this point and of the ordinate-axis ($\overrightarrow{Oy}$) of the second orthogonal coordinate system;
b23) defining (1075) a remarkable point ($P_{tcp}$) to be reached from the point of impact ($P_{impact}$), the distribution (dx, dy) of nozzles (14) on the print head (10), the axis vector ($\overrightarrow{AxeXT}$) of the head and the Y-axis (Oy) of the second orthogonal coordinate system (R1);
b24) including (1076) the remarkable point ($P_{tcp}$) and the print head orientation vector ($\overrightarrow{OT}$) at the corresponding point of impact *(*Pimpact) in the trajectory (Traj).
and in that, preferably,

- step b) includes an additional sub-step (1077) of addition to the defined trajectory (Traj) for each strip (T) of the surface to be coated of at least one entry point ($P_{e1}$,$P_{e2}$) and/or exit point ($P_{d1}$,$P_{d2}$), in addition to those calculated in step b24) and/or
- step b) includes an additional sub-step (1078) of optimisation of the number of remarkable points ($P_{tcp}$) on the trajectory, during which at least one remarkable point is deleted, i.e. a remarkable point that is collinear to a point that precedes it and a point that follows it along the length of the trajectory (Traj) and whose axis of orientation ($\overrightarrow{OT}$) is parallel to the axes of orientation of the points that precede and follow it along the length of the trajectory and/or
- step b) includes a determination sub-step, based on the size of a beam (15) of coating product coming from the print head (10) and the width (d2) of the strip (T) of the surface to be coated, the number (ARmax) of return movements the print head must perform to cover the strip to be coated (T) and in that, if necessary, one or more sections (ΔTraj) of the trajectory (T), following the first forward movement, are calculated by reversing the order of remarkable points ($P_{ctp}$) defined in step b23) for the previous section of the trajectory.

11. Method according to one of the preceding claims, **characterised in that** the sub-steps a71) to a73) or b81) and b82) are implemented until a certain number of iterations (V1, V2) are done.

12. Method according to one of the previous claims **characterised by** that, based on the trajectory (Traj) defined in step b), the calculator (40) calculates, for each print head nozzle (14) a distance to cover ($d_l$) or not cover ($d'_l$) from a series of points ahead (p) of the print head (10).

13. Method according to one of the previous claims, **characterised by** that step e) includes sub-steps that consist of:

e1) discretising (1101) the shifting of the print head (10), between the remarkable points ($P_{tcp}$) of a trajectory (Traj), using discretised positions ($P14_{l,p}$);
e2) determining (1102) the existence of a point of impact ($PI_{\ell,p}$) for each nozzle (14) in each position discretised ($P14_{\ell,p}$) in the sub-step e1);
e3) calculating (1103) a distance to cover ($d_\ell$) or not cover ($d'_\ell$) in each discretised position of the trajectory and, possibly, multiplying factors, based on the distance between a nozzle (40) and a reference nozzle (140) and
e4) creating (1104) a programming sheet (Prog(TRAJ)) to activate each nozzle along the length of the trajectory.

14. Facility of application of liquid coverage product on a surface to be coated (S) of an object (O), which includes a print head (10) that, on the one hand, is mounted on the arm (22) of a robot (20) so the print head can be moved depending on the surface and that, on the other hand, is made up of a body (12) equipped with at least one printing nozzle (14), this set-up being **characterised by** that it includes a calculator (40) configured to implement the steps of a method according to one of the previous claims, realized by the calculator.

## FIG.1

FIG.2

## FIG.3

## FIG.4

RO

$\vec{N}_{sp}$

Su

z

y

0

x

B1

T

M

$\pi_0$

B2

Z0 Z1

SP

S (F)

# FIG.5

## FIG.6

# FIG.7

# FIG.8

# FIG.9

## FIG.10

100

S(F)

SP

T

102

Traj

104

$$S = S - T$$

106

$$S = \varnothing \; ?$$ N

108

Y

1101 — p

1102 — $P14_{\ell,p}$ $PI_{\ell,p}$

1103 — $d_{\ell}, d'_{\ell}$

110

1104 — Prog (TRAJ)

10

112

# FIG.11

$$\text{EP } 3\ 925\ 706\ \text{B1}$$

**FIG.12**

## FIG.13

$$j = 0, k = 0 \qquad 1041$$

$$R1\,(P_{init}\,,\ \vec{Ox},\ \vec{Oy},\ \vec{Oz}\,) \qquad 1042$$

$$P_{start}\,(T,\ R0,\ \vec{Ox}) \qquad 1043$$

$$P_{end}\ (T,\ R0,\ \vec{Ox}) \qquad 1044$$

$$\vec{nX} = \vec{Ox} \qquad 1045$$

$$1046$$

$$j = j + 1$$

$$Q_{init}\ (T,\ \vec{nX}) \qquad 1047$$

$$Q_{cut}\ (Q_{init},\ \vec{nX},\ d3) \qquad 1048$$

$$1049 \quad P'$$

$$1054 \qquad \vec{N'_\mu}\ (P')$$

$$\vec{nX} = \vec{X}_{temp} \qquad 1050$$

$$\vec{X}_{temp} = \dfrac{\vec{N'_\mu} \wedge -\vec{Oy}}{|\ \vec{N'_\mu} \wedge -\vec{Oy}\ |} \qquad 1051$$

$$1053$$

$$1052$$

$$j < V2\ ? \qquad \vec{X}_{temp} \neq \vec{nX}\ ?$$

$$P$$

$$1055$$

$$\vec{OT} = \dfrac{\vec{nX} \wedge -\vec{Oy}}{|\ \vec{nX} \wedge -\vec{Oy}\ |} \qquad 1056 \qquad 104$$

$$Q_{centre}(Q_{init},\ Q_{cut}\,,\vec{nX}) \qquad 1057$$

$$1059$$

$$P_{impact}\,(P_{centre},\ \vec{OT}\,)\ ? \xrightarrow{N} P_{impact} = P'_{impact}$$

$$1058$$

$$P_{impact}\,\vec{OT} \rightarrow \qquad 1070$$

$$T = T - P \qquad 1071$$

$$1073 \qquad T = \varnothing\ ? \qquad 1072$$

$$j = o$$

$$\vec{Axe\ XT}\ (P_{impact}) = \dfrac{\vec{OT} \wedge \vec{Oy}}{|\vec{OT} \wedge \vec{Oy}\ |} \qquad 1074$$

$$1075 \quad P_{tcp}\,(P_{impact}\,,\vec{Axe\ XT}\ dx,\ \vec{Oy},\ dy)$$

$$Traj\ (P_{tcp}\,;\ \vec{OT}\,) \qquad 1076$$

$$P_{e1},\ P_{e2},\ P_{d1},\ P_{d2} \qquad 1077$$

$$Optim\ (P_{tcp}) \qquad 1078$$

$$1079 \qquad k = k + 1$$

$$1092$$

$$k = ARMax\ ? \xrightarrow{Y} Traj\ (T\,)$$

$$1090$$

$$Traj = Traj + \Delta Traj \qquad 1091$$

**RÉFÉRENCES CITÉES DANS LA DESCRIPTION**

**Documents brevets cités dans la description**

- US 20150042716 A
- US 20160052312 A
- DE 102014011301 A